# EUROPEAN PATENT SPECIFICATION

(11) **EP 3 119 054 B1**
(45) Date of publication and mention of the grant of the patent: **09.05.2018**
(21) Application number: 16158537.7
(22) Date of filing: 03.03.2016
(51) Int. Cl.: H04L 29/06, H04W 12/08, H04L 12/28, H04W 4/00, H04B 5/00

(54) **METHOD FOR CONTROLLING SMART APPARATUS, TERMINAL AND SERVER**
VERFAHREN ZUR STEUERUNG EINER INTELLIGENTEN VORRICHTUNG, ENDGERÄT UND SERVER
PROCÉDÉ DE COMMANDE D'APPAREIL INTELLIGENT, TERMINAL ET SERVEUR

(30) Priority: 13.07.2015 CN 201510408993
(43) Date of publication of application: 18.01.2017
(73) Proprietor: Xiaomi Inc., Beijing 100085 (CN)
(72) Inventor: HOU, Enxing, Haidian District Beijing 100085 (CN); ZENG, Fan, Haidian District Beijing 100085 (CN); LV, Yangpeng, Haidian District Beijing 100085 (CN)
(74) Representative: Loustalan, Paul William

(56) References cited:
- US-A1- 2014 005 809
- US-A1- 2014 091 923
- US-A1- 2014 121 786
- US-A1- 2014 167 929

## Description

### TECHNICAL FIELD

The present disclosure generally relates to a field of smart home, and more particularly, to a method for controlling a smart apparatus, a terminal and a server.

### BACKGROUND

In the field of smart home, the smart apparatus control refers to a method that the smart apparatus executes corresponding actions when certain trigger condition is met, for example, a button is pressed by the user, or data detected by the smart sensor exceeds the threshold.

With the control solution of the smart apparatus, various smart apparatuses (such as, audio and video apparatus, illumination system, curtain controller, air-condition controller) at home can be linked together to provide various functions and means (such as, household electrical appliances control, illumination control, telephone remote control, indoor and outdoor remote control). Based on the control solution of the smart apparatus, smart home may provide all aspects of information interaction function, and save money for various types of energy cost. Therefore, with the wide application of smart home, the smart apparatus has been popularized and applied rapidly.

One such control solution is described in US 2014/0167929 A1, in which the method for controlling groups of devices in a home network system, comprises receiving a request message for executing a first operation mode from a mobile station through the Internet, reading a control list stored for the first operation mode, in order to determine home devices associated with the first operation mode and in order to determine functions of the home control commands, instructing the home devices to execute the functions, to the home devices, respectively, according to the control list, and reporting the results of execution of the functions, according to the control commands, to the mobile station.

US 2014/0091923 A1 discloses a method for registering for an appliance event notification. The method comprises scanning a machine-readable code by a device and sending a request to register for an event notification to an appliance. A user interface corresponding to the appliance is displayed and the user interface includes an identification of at least one appliance specific event. A selection of an appliance specific event is received and a request to register for an event notification corresponding to the selected appliance specific event is sent to the appliance. An event notification is received upon occurrence of the event at the appliance. Additionally, the user interface includes an identification of at least one appliance specific control function. A request to register for control of the appliance corresponding to a selected appliance specific control function is sent to the appliance. Accordingly, instructions for control of the appliance are sent from the mobile device.

### SUMMARY

The present disclosure provides a method for controlling a smart apparatus, a terminal and a server. Technical solutions are as follows.

According to a first aspect of embodiments of the present disclosure, there is provided a method for controlling a smart apparatus performed on a terminal, comprising: acquiring, by the terminal via a close range wireless communication with the smart apparatus, or by scanning a two-dimensional code of the smart apparatus by the terminal, an apparatus identification of the smart apparatus from the smart apparatus, and sending an enquiry request containing the apparatus identification to a server by a terminal; receiving an enquiry response returned from the server and pushing the enquiry response to a user by the terminal, the enquiry response comprising a trigger condition group and an execution condition group corresponding to the apparatus identification; and sending a control instruction to the server by the terminal, the control instruction comprising a first trigger condition and a first execution condition selected by the user according to the trigger condition group and the execution condition group, the control instruction configured to enable the server to control the smart apparatus to execute the first execution condition when the server detects that the first trigger condition is met.

According to a second aspect of embodiments of the present disclosure, there is provided a method for controlling a smart apparatus performed on a server, comprising: receiving an enquiry request containing an apparatus identification of the smart apparatus from a terminal by a server, the apparatus identification obtained from the smart apparatus by the terminal via a close range wireless communication with the smart apparatus, or by scanning a two-dimensional code of the smart apparatus; sending an enquiry response to the terminal by the server, the enquiry response comprising a trigger condition group and an execution condition group corresponding to the apparatus identification; receiving a control instruction from the terminal by the server, the control instruction comprising a first trigger condition and a first execution condition selected by a user according to the trigger condition group and the execution condition group; and controlling the smart apparatus to execute the first execution condition by the server, when detecting that the first trigger condition is met.

According to a third aspect of embodiments of the present disclosure, there is provided a terminal, comprising: an acquiring module, configured to acquire an apparatus identification of a smart apparatus from the smart apparatus via a close range wireless communication with the smart apparatus, or by scanning a two-dimensional code of the smart apparatus; a first sending module, configured to send an enquiry request containing the apparatus identification to a server; a first receiving module, configured to receive an enquiry response returned from the server, the enquiry response comprising a trigger condition group and an execution condition group corresponding to the apparatus identification; and a pushing module, configured to push the enquiry response to a user; in which the first sending module is further configured to send a control instruction to the server, the control instruction comprising a first trigger condition and a first execution condition selected by the user according to the trigger condition group and the execution condition group, the control instruction configured to enable the server to control the smart apparatus to execute the first execution condition when the server detects that the first trigger condition is met.

According to a fourth aspect of embodiments of the present disclosure, there is provided a server, comprising: a first receiving module, configured to receive an enquiry request containing an apparatus identification of the smart apparatus from a terminal, the apparatus identification obtained from the smart apparatus by the terminal via a close range wireless communication with the smart apparatus, or by scanning a two-dimensional code of the smart apparatus; a sending module, configured to send an enquiry response to the terminal, the enquiry response comprising a trigger condition group and an execution condition group corresponding to the apparatus identification; and a first processing module; in which the first receiving module is further configured to receive a control instruction from the terminal, the control instruction comprising a first trigger condition and a first execution condition selected by a user according to the trigger condition group and the execution condition group; and the first processing module is configured to control the smart apparatus to execute the first execution condition, when detecting that the first trigger condition is met.

According to a fifth aspect of embodiments of the present disclosure, there is provided a terminal, comprising: a processor; and a memory for storing instructions executable by the processor; in which the processor is configured to: acquire, by the terminal via a close range wireless communication with the smart apparatus, or by scanning a two-dimensional code of the smart apparatus by the terminal, an apparatus identification of the smart apparatus from the smart apparatus, and send an enquiry request containing the apparatus identification to a server; receive an enquiry response returned from the server and pushing the enquiry response to a user, the enquiry response comprising a trigger condition group and an execution condition group corresponding to the apparatus identification; send a control instruction to the server, the control instruction comprising a first trigger condition and a first execution condition selected by the user according to the trigger condition group and the execution condition group, the control instruction configured to enable the server to control the smart apparatus to execute the first execution condition when the server detects that the first trigger condition is met.

According to a sixth aspect of embodiments of the present disclosure, there is provided a terminal, comprising: a processor; and a memory for storing instructions executable by the processor; wherein the processor is configured to: receive an enquiry request containing an apparatus identification of the smart apparatus from a terminal, the apparatus identification obtained from the smart apparatus by the terminal via a close range wireless communication with the smart apparatus, or by scanning a two-dimensional code of the smart apparatus by the terminal; send an enquiry response to the terminal, the enquiry response comprising a trigger condition group and an execution condition group corresponding to the apparatus identification; receive a control instruction from the terminal, the control instruction comprising a first trigger condition and a first execution condition selected by a user according to the trigger condition group and the execution condition group; control the smart apparatus to execute the first execution condition, when detecting that the first trigger condition is met.

The technical solutions provided by the present disclosure may include following advantages.

The user may obtain the apparatus identification of the smart apparatus from the smart apparatus required to be controlled via the terminal, the terminal obtains the trigger condition group and the execution condition group supported by the smart apparatus from the server according to the apparatus identification, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

Further, based on a close range communication or a two-dimension code scanning, the user obtains the identification of the smart apparatus by using the terminal if the user is around the smart apparatus, which implements a control for the smart apparatus in a convenient and accurate way.

In another implementation according to embodiments of the present disclosure, the binding relationship between the user and the smart apparatus is established in advance. When receiving the enquiry request, the server sends feedback to the terminal only when the binding relationship between the smart apparatus required to be controlled and the user is determined, which effectively ensures a security of smart home.

In yet another implementation according to embodiments of the present disclosure, the user may add a trigger condition set by oneself into the trigger condition group supported by the smart apparatus. In this way, it is possible to have the trigger condition of the smart apparatus made to order according to a user's requirement, thus improving the individuation and flexibility of smart home.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for controlling a smart apparatus, according to an exemplary embodiment.
Fig. 2A is a flow chart showing a method for controlling a smart apparatus, according to another exemplary embodiment.
Fig. 2B is a flow chart showing a method for controlling a smart apparatus, according to another exemplary embodiment.
Fig. 2C is a flow chart showing a method for controlling a smart apparatus, according to another exemplary embodiment.
Fig. 2D is a flow chart showing a method for controlling a smart apparatus, according to another exemplary embodiment.
Fig. 3 is a flow chart showing a method for controlling a smart apparatus, according to another exemplary embodiment.
Fig. 4A is a flow chart showing a method for controlling a smart apparatus, according to another exemplary embodiment.
Fig. 4B is a flow chart showing a method for controlling a smart apparatus, according to another exemplary embodiment.
Fig. 5 is a flow chart showing a method for controlling a smart apparatus, according to another exemplary embodiment.
Fig. 6 is a flow chart showing a method for controlling a smart apparatus, according to another exemplary embodiment.
Fig. 7 is a flow chart showing a method for controlling a smart apparatus, according to an exemplary embodiment.
Fig. 8A is a flow chart showing a method for controlling a smart apparatus, according to another exemplary embodiment.
Fig. 8B is a flow chart showing a method for controlling a smart apparatus, according to another exemplary embodiment.
Fig. 9 is a flow chart showing a method for controlling a smart apparatus, according to another exemplary embodiment.
Fig. 10 is a flow chart showing a method for controlling a smart apparatus, according to another exemplary embodiment.
Fig. 11 is a flow chart showing a method for controlling a smart apparatus, according to an exemplary embodiment.
Fig. 12 is a block diagram illustrating a terminal, according to an exemplary embodiment.
Fig. 13A is a block diagram illustrating a terminal, according to another exemplary embodiment.
Fig. 13B is a block diagram illustrating a terminal, according to another exemplary embodiment.
Fig. 13C is a block diagram illustrating a terminal, according to another exemplary embodiment.
Fig. 13D is a block diagram illustrating a terminal, according to another exemplary embodiment.
Fig. 14 is a block diagram illustrating a terminal, according to another exemplary embodiment.
Fig. 15 is a block diagram illustrating a terminal, according to another exemplary embodiment.
Fig. 16 is a block diagram illustrating a terminal, according to another exemplary embodiment.
Fig. 17 is a block diagram illustrating a terminal, according to another exemplary embodiment.
Fig. 18 is a block diagram illustrating a server, according to an exemplary embodiment.
Fig. 19A is a block diagram illustrating a server, according to another exemplary embodiment.
Fig. 19B is a block diagram illustrating a server, according to another exemplary embodiment.
Fig. 20 is a block diagram illustrating a server, according to another exemplary embodiment.
Fig. 21 is a block diagram illustrating a server, according to another exemplary embodiment.
Fig. 22 is a block diagram of a terminal, according to an exemplary embodiment.
Fig. 23 is a block diagram of a server, according to an exemplary embodiment.
Fig. 24 is a block diagram of a terminal 2400, according to an exemplary embodiment.
Fig. 25 is a block diagram of a server 2500, according to an exemplary embodiment.

The accompanying drawings, which are incorporated in and constitute a part of this specification, illustrate embodiments consistent with the invention and, together with the description, serve to explain the principles of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Items related to the embodiments of the present disclosure will be explained herein firstly.

Terminal refers to an electronic apparatus used in movement, including but not limited to, any one of mobile electronic products, such as a mobile phone, a smart phone, a PAD (personal digital assistant), a laptop, a tablet computer, a POS (Point Of Sale), a vehicle-mounted computer, which may interact with a person via a keyboard, a touchpad or an acoustic control apparatus. It should be understood by the person skilled in the art that other mobile terminals, if applicable to the present disclosure, also should be included in the protection scale of the present disclosure.

Smart apparatus refers to a household electrical appliance formed by introducing a microprocessor, a sensor technology and a network communication technology therein, which may automatically sense a residential space state, a state of the household electrical appliance and a service state of the household electrical appliance, automatically control and receive control instructions within the house or remotely, and thus execute corresponding operations.

Server refers to a data storage and computation entity linked with the terminal via network, including but not limited to, a general computer, a special computing apparatus, a virtual computing apparatus. One server may provide service for a plurality of terminals.

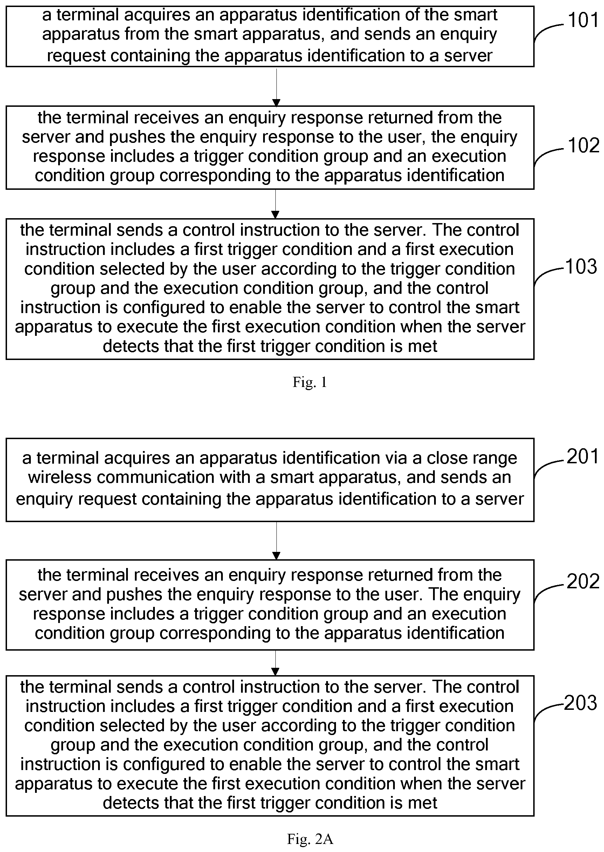

Fig. 1 is a flow chart showing a method for controlling a smart apparatus, according to an exemplary embodiment. Referring to Fig. 1, the method for controlling a smart apparatus applied in a terminal is taken as an example for illustration in this embodiment. The method for controlling a smart apparatus may include the following steps.

In step 101, a terminal acquires an apparatus identification of the smart apparatus from the smart apparatus, and sends an enquiry request containing the apparatus identification to a server.

The apparatus identification is for characterizing the smart apparatus, for example, the apparatus identification may be an MAC (Media Access Control) address for the smart apparatus.

Take a practical application scene for example. The scene refers to a smart home scene, which may include a large number of smart apparatuses.

In smart home, control information of various smart apparatuses may be configured in the server in advance. The control information includes a trigger condition and an execution condition. Accordingly, when the server detects that the trigger condition is met (for example, the trigger condition may be that a button is pressed by a user and it is detected that certain data exceeds a predetermined threshold by a smart sensor, or, when it is detected that working state of other smart apparatus meets a predetermined state), the server controls a corresponding smart apparatus to execute the execution condition (for example, to activate or to inactivate), thus implementing a smart home control solution, and effectively promoting the user experience.

Specifically, in the smart home control solution, the control information of the smart apparatus needs to be configured in advance, that is, the server needs to acquire the trigger condition and the execution condition of the smart apparatus in advance. In this embodiment, the terminal acquires the apparatus identification of the smart apparatus from the smart apparatus conveniently, and sends the enquiry request containing the apparatus identification to the server to execute subsequent solution.

In step 102, the terminal receives an enquiry response returned from the server and pushes the enquiry response to the user. The enquiry response includes a trigger condition group and an execution condition group corresponding to the apparatus identification.

Also take the practical application scene described above for example.

After the terminal sends the enquiry request to the server, according to the apparatus identification in the enquiry request, the server inquires trigger condition groups and execution condition groups corresponding to apparatus identifications of respective smart apparatuses to obtain the trigger condition group and the execution condition group corresponding to the apparatus identification, i.e., a trigger condition group and an execution condition group supported by the smart apparatus. The server returns the enquiry response including the trigger condition group and the execution condition group supported by the smart apparatus to the terminal. After receiving the enquiry response, the terminal pushes the trigger condition group and the execution condition group supported by the smart apparatus to the user to execute subsequent solution.

The number of the trigger condition in the trigger condition group or the number of the execution condition in the execution condition group may be at least one.

Specifically, the execution condition group supported by the smart apparatus may be decided by performances of the smart apparatus. For example, as far as a smart illumination apparatus, the execution condition group supported thereby may include activate illumination and inactivate illumination.

Yet specifically, the trigger condition group supported by the smart apparatus may be predetermined or may be determined according to the user's requirement. Also take the smart illumination apparatus for example. The trigger condition group supported by the smart illumination apparatus may include pressing a button once or pressing the button twice continuously by the user.

In step 103, the terminal sends a control instruction to the server. The control instruction includes a first trigger condition and a first execution condition selected by the user according to the trigger condition group and the execution condition group, and the control instruction is configured to enable the server to control the smart apparatus to execute the first execution condition when the server detects that the first trigger condition is met.

Also take the practical application scene described above for example.

After the terminal pushes the trigger condition group and the execution condition group supported by the smart apparatus to the user, the user may select the first trigger condition and the first execution condition therefrom. The terminal includes the first trigger condition and the first execution condition selected by the user into the control instruction and sends the control instruction to the server. According to the control instruction, the server controls the smart apparatus to execute the first execution condition, thus implementing smart home, when detecting that the first trigger condition is met.

Also take the smart illumination apparatus described above for example. Provided that the first trigger condition selected by the user is to press the button twice continuously by the user, and the first execution condition is activation, when subsequently detecting that the button is pressed twice continuously by the user, the server may send a corresponding instruction to the smart illumination apparatus to control the smart illumination apparatus to be activated, thus completing a smart control for the smart illumination apparatus.

In this embodiment, when wishing to control certain smart apparatus, the user may directly obtain the apparatus identification of the smart apparatus from the smart apparatus via the terminal, the terminal obtains the trigger condition group and the execution condition group supported by the smart apparatus for the user to select by sending the enquiry request to the server, and the user sends the first trigger condition and the first execution condition selected to the server via the terminal, thus implementing the smart control for the smart apparatus.

In practice, in the scene including a large number of smart apparatuses, if a conventional solution is applied that the user identifies the apparatus identification of the smart apparatus that he or she wants to control from an apparatus identification list including apparatus identifications of a large number of smart apparatuses, not only the efficiency is low, but also a false identification is easy to create.

However, with the solution based on the present embodiment, in the scene including a large number of smart apparatuses, it is not required for the user to manually identify the apparatus identification of the smart apparatus that he or she wants to control from the apparatus identification list including apparatus identifications of a large number of smart apparatuses, instead, the user may acquire a corresponding apparatus identification conveniently and accurately from the smart apparatus that he or she wants to control, thus improving a convenience and reliability of the smart apparatus control. Moreover, with the solution based on the present embodiment, the trigger condition groups and the execution condition groups supported by respective smart apparatuses may be stored in the server, thus further effectively saving a storage resource of the terminal.

The method for a server involved in this embodiment may refer to related contents in following embodiments, which will not be described herein.

In conclusion, with the method for controlling a smart apparatus according to the embodiment of the present disclosure, the user may obtain the apparatus identification of the smart apparatus from the smart apparatus required to be controlled via the terminal, the terminal obtains the trigger condition group and the execution condition group supported by the smart apparatus from the server according to the apparatus identification, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

Fig. 2A is a flow chart showing a method for controlling a smart apparatus, according to another exemplary embodiment. Referring to Fig. 2A, the method for controlling a smart apparatus applied in a terminal is taken as an example for illustration in this embodiment. The method for controlling a smart apparatus may include the following steps.

In step 201, a terminal acquires an apparatus identification via a close range wireless communication with a smart apparatus, and sends an enquiry request containing the apparatus identification to a server.

In step 202, the terminal receives an enquiry response returned from the server and pushes the enquiry response to the user. The enquiry response includes a trigger condition group and an execution condition group corresponding to the apparatus identification.

In step 203, the terminal sends a control instruction to the server. The control instruction includes a first trigger condition and a first execution condition selected by the user according to the trigger condition group and the execution condition group, and the control instruction is configured to enable the server to control the smart apparatus to execute the first execution condition when the server detects that the first trigger condition is met.

The close range wireless communication between the terminal and the smart apparatus may include many manners.

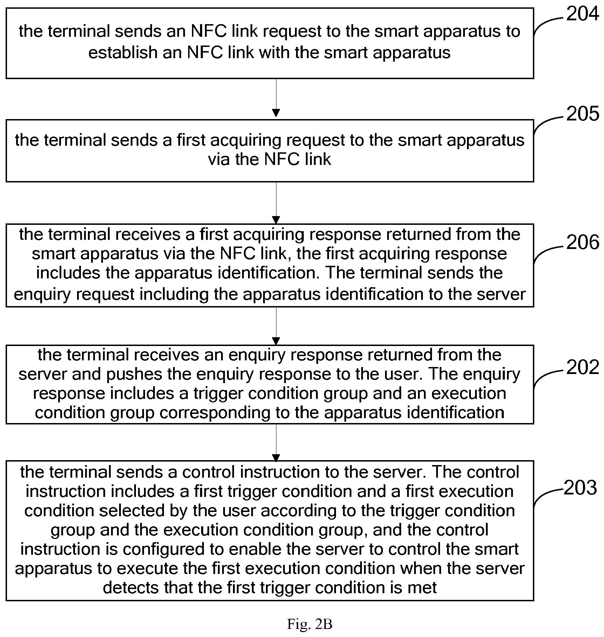

Alternatively, an NFC (Near Field Communication) may be applied to realize the close range wireless communication. Accordingly, as shown in Fig. 2B, Fig. 2B is a flow chart showing a method for controlling a smart apparatus, according to another exemplary embodiment. Based on the embodiment shown in Fig. 2A, step 201 may include following steps specifically.

In step 204, the terminal sends an NFC link request to the smart apparatus to establish an NFC link with the smart apparatus.

In step 205, the terminal sends a first acquiring request to the smart apparatus via the NFC link.

In step 206, the terminal receives a first acquiring response returned from the smart apparatus via the NFC link. The first acquiring response includes the apparatus identification. The terminal sends the enquiry request including the apparatus identification to the server.

In practice, an NFC tag may be disposed on the smart apparatus. When the user takes the terminal with an NFC chip along with oneself and gets close to the NFC tag of the smart apparatus, the NFC chip sends the NFC link request to the NFC tag. In this way, an NFC link between the terminal and the smart apparatus may be established, and thus a data communication therebetween is realized based on the NFC link. Specifically, the NFC chip of the terminal sends the acquiring request to the NFC tag of the smart apparatus via the NFC link, and the smart apparatus sends the apparatus identification stored in itself to the NFC chip of the terminal via the NFC tag according to the acquiring request, thus enabling the terminal to acquire the apparatus identification of the smart apparatus in a convenient and accurate way.

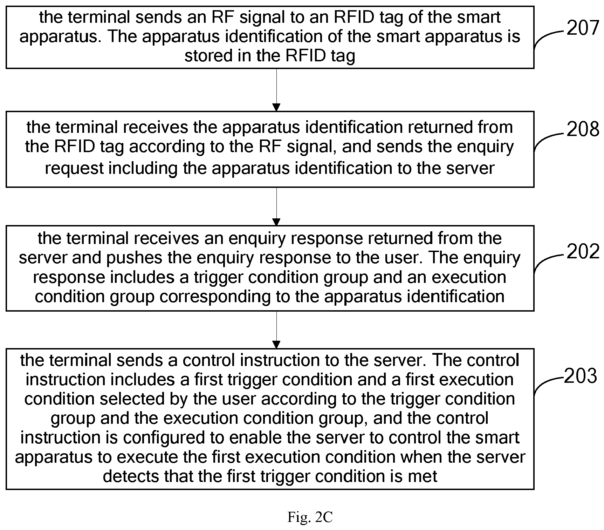

Yet alternatively, an RFID (Radio Frequency Identification) may be applied to realize the close range wireless communication. Accordingly, as shown in Fig. 2C, Fig. 2C is a flow chart showing a method for controlling a smart apparatus, according to another exemplary embodiment. Based on the embodiment shown in Fig. 2A, step 201 may include following steps specifically.

In step 207, the terminal sends an RF signal to an RFID tag of the smart apparatus. The apparatus identification of the smart apparatus is stored in the RFID tag.

In step 208, the terminal receives the apparatus identification returned from the RFID tag according to the RF signal, and sends the enquiry request including the apparatus identification to the server.

In practice, the RFID tag may be disposed on the smart apparatus. When the user takes the terminal along with oneself and gets close to the RFID tag of the smart apparatus, the terminal sends the RF signal to the RFID tag, the RFID tag of the smart apparatus sends the apparatus identification stored in itself to the terminal according to the RF signal, thus enabling the terminal to acquire the apparatus identification of the smart apparatus in a convenient and accurate way.

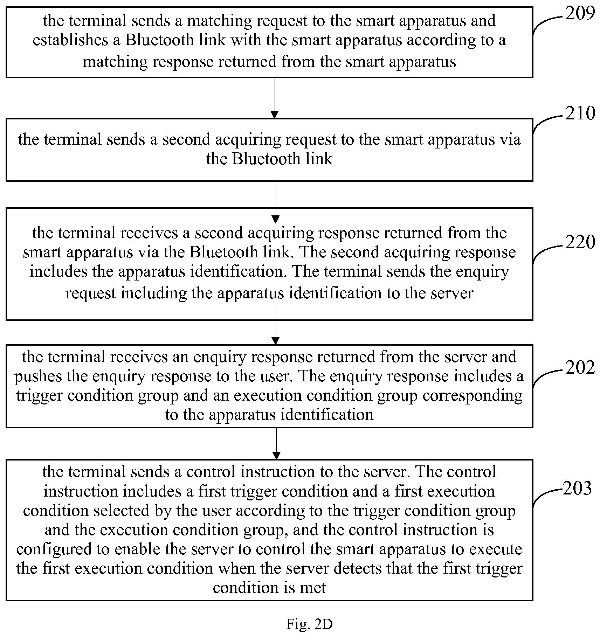

Yet alternatively, a Bluetooth may be applied to realize the close range wireless communication. Accordingly, as shown in Fig. 2D, Fig. 2D is a flow chart showing a method for controlling a smart apparatus, according to another exemplary embodiment. Based on the embodiment shown in Fig. 2A, step 201 may include following steps specifically.

In step 209, the terminal sends a matching request to the smart apparatus and establishes a Bluetooth link with the smart apparatus according to a matching response returned from the smart apparatus.

In step 210, the terminal sends a second acquiring request to the smart apparatus via the Bluetooth link.

In step 220, the terminal receives a second acquiring response returned from the smart apparatus via the Bluetooth link. The second acquiring response includes the apparatus identification. The terminal sends the enquiry request including the apparatus identification to the server.

In practice, a Bluetooth module may be disposed on the smart apparatus. When the user takes the terminal supporting Bluetooth along with oneself and gets close to the smart apparatus, the terminal sends the matching request to the smart apparatus. In this way, a Bluetooth link between the terminal and the smart apparatus may be established according to the matching response returned from the smart apparatus, and thus a data communication therebetween is realized based on the Bluetooth link. Specifically, the terminal sends the acquiring request to the smart apparatus via the Bluetooth link, and the smart apparatus sends the apparatus identification stored in itself to the terminal via the Bluetooth link according to the acquiring request, thus enabling the terminal to acquire the apparatus identification of the smart apparatus in a convenient and accurate way.

The method for a server involved in this embodiment may refer to related contents in following embodiments, which will not be described herein.

In conclusion, with the method for controlling a smart apparatus according to the embodiment of the present disclosure, by using the terminal with the close range wireless communication manner, the user may determine the apparatus identification of the smart apparatus that he or she wants to control. In other words, the user may only stay around the smart apparatus, and obtains the apparatus identification of the smart apparatus via sweeping with the terminal, so as to implement a control for the smart apparatus in a convenient and accurate way.

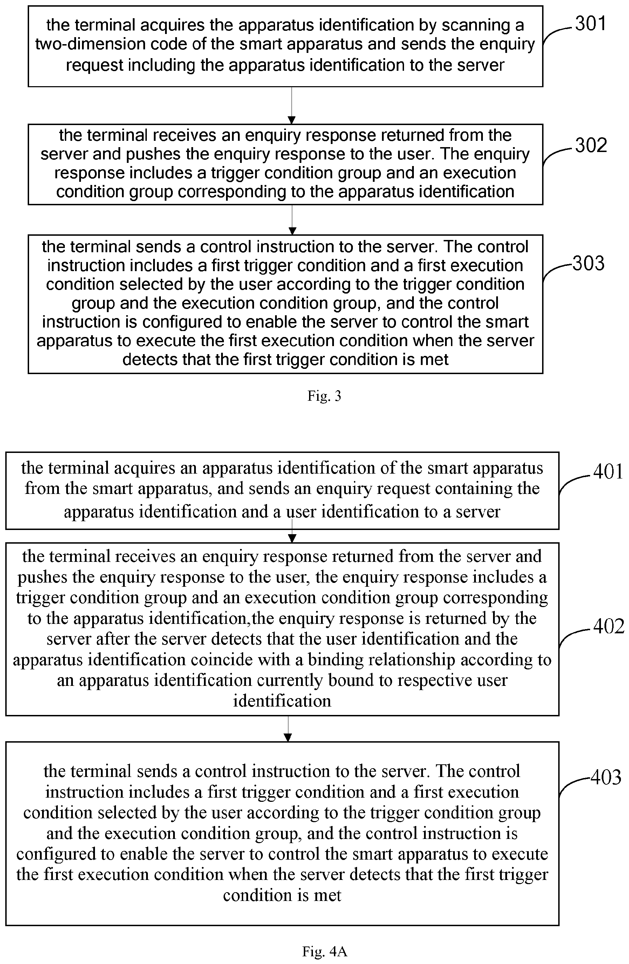

Fig. 3 is a flow chart showing a method for controlling a smart apparatus, according to another exemplary embodiment. As shown in Fig. 3, the method for controlling a smart apparatus applied in a terminal is taken as an example for illustration in this embodiment. The method for controlling a smart apparatus may include the following steps.

In step 301, the terminal acquires the apparatus identification by scanning a two-dimension code of the smart apparatus and sends the enquiry request including the apparatus identification to the server.

In step 302, the terminal receives an enquiry response returned from the server and pushes the enquiry response to the user. The enquiry response includes a trigger condition group and an execution condition group corresponding to the apparatus identification.

In step 303, the terminal sends a control instruction to the server. The control instruction includes a first trigger condition and a first execution condition selected by the user according to the trigger condition group and the execution condition group, and the control instruction is configured to enable the server to control the smart apparatus to execute the first execution condition when the server detects that the first trigger condition is met.

In practice, the apparatus identification of the smart apparatus may be written into the two-dimension code, and the two-dimension code is disposed on the smart apparatus. Accordingly, the user may only use the terminal to scan the two-dimension code of the smart apparatus, so as to read the apparatus identification of the smart apparatus.

The method for a server involved in this embodiment may refer to related contents in following embodiments, which will not be described herein.

In conclusion, with the method for controlling a smart apparatus according to the embodiment of the present disclosure, by using the terminal to scan the two-dimension code of the smart apparatus, the user may obtain the apparatus identification of the smart apparatus, so as to implement a control for the smart apparatus in a convenient and accurate way.

Fig. 4A is a flow chart showing a method for controlling a smart apparatus, according to another exemplary embodiment. As shown in Fig. 4A, the method for controlling a smart apparatus applied in a terminal is taken as an example for illustration in this embodiment. The method for controlling a smart apparatus may include the following steps.

In step 401, a terminal acquires an apparatus identification of the smart apparatus from the smart apparatus, and sends an enquiry request containing the apparatus identification and a user identification to a server.

In step 402, the terminal receives an enquiry response returned from the server and pushes the enquiry response to the user. The enquiry response includes a trigger condition group and an execution condition group corresponding to the apparatus identification. The enquiry response is returned by the server after the server detects that the user identification and the apparatus identification coincide with a binding relationship according to an apparatus identification currently bound to respective user identification.

In step 403, the terminal sends a control instruction to the server. The control instruction includes a first trigger condition and a first execution condition selected by the user according to the trigger condition group and the execution condition group, and the control instruction is configured to enable the server to control the smart apparatus to execute the first execution condition when the server detects that the first trigger condition is met.

The user identification refers to an identification characterizing an identity of the user, such as an ID number of the user or a user name of the user. Specifically, the terminal may acquire the user identification pre-stored directly, or may receive the user identification inputted by the user via an interactive interface.

Take a practical scene for example. After acquiring the apparatus identification of the smart apparatus from the smart apparatus, the terminal sends an enquiry request containing the apparatus identification and the user identification to the server. The server inquires apparatus identifications currently bound to respective user identifications according to the enquiry request received. The binding relationship between the user identification and the apparatus identification mentioned herein is for characterizing an ownership between the smart apparatus and the user. If determining that the apparatus identification belongs to one of apparatus identifications currently bound to the user identification, the server returns the enquiry response to the terminal.

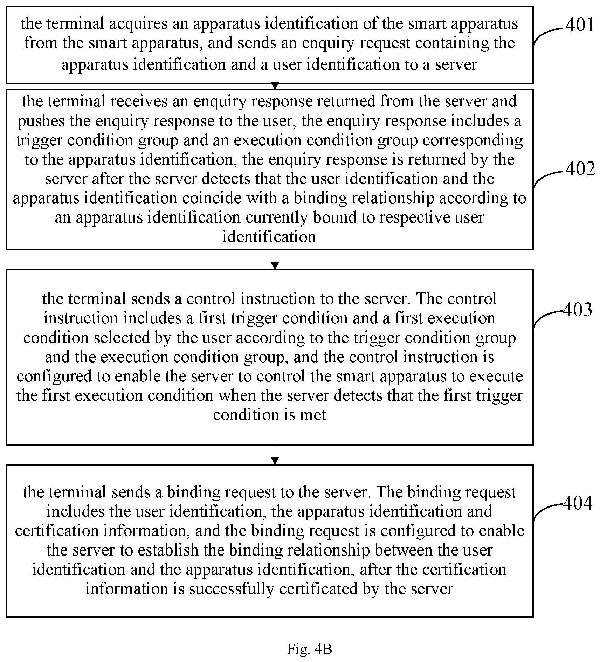

In order to establish the binding relationship between respective user identification and respective apparatus identification in the server, as shown in Fig. 4B, Fig. 4B is a flow chart showing a method for controlling a smart apparatus, according to another exemplary embodiment. Based on the embodiment shown in Fig. 4A, the method for controlling a smart apparatus may include following steps.

In step 404, the terminal sends a binding request to the server. The binding request includes the user identification, the apparatus identification and certification information, and the binding request is configured to enable the server to establish the binding relationship between the user identification and the apparatus identification, after the certification information is successfully certificated by the server.

In practice, the certification information is used for certifying the ownership between the user and the smart apparatus. Take a practical scene for example. Each smart apparatus is configured with unique certification information (such as, a validation code which may be a series of numbers or letters) at a factory, and the unique certification information is stored in the server. After purchasing the smart apparatus, the user may obtain the certification information corresponding to the smart apparatus. Accordingly, the user sends the binding request to the server via the terminal, the binding request including the apparatus identification of the smart apparatus, the user identification of the user, and the certification information corresponding to the smart apparatus. The server certificates the certification information of the smart apparatus according to the certification information of respective smart apparatuses currently stored. If the certification succeeds, it is determined that the smart apparatus belongs to the user, and then the server establishes the binding relationship between the user identification and the apparatus identification.

It should be noted that, this embodiment may be combined with any one of embodiments as shown in Figs. 1-3. For example specifically, based on any one of methods described above, the terminal may acquire the apparatus identification of the smart apparatus, and sends the enquiry request containing the apparatus identification and the user identification to the server. The server validates the ownership between the user and the smart apparatus according to the enquiry request. If the validation succeeds, the server returns the enquiry response to the terminal.

The method for a server involved in this embodiment may refer to related contents in following embodiments, which will not be described herein.

In conclusion, with the method for controlling a smart apparatus according to the embodiment of the present disclosure, the ownership between the smart apparatus and the user is certificated according to the certification information in the binding request, and the binding relationship between the user and the smart apparatus is established after the certification succeeds. Subsequently, when receiving the enquiry request from the terminal, the server first determines that the smart apparatus needing to be controlled belongs to the user according to the binding relationship between respective user identification and respective apparatus identification, and then executes following smart apparatus control solution, thus improving the security of smart home.

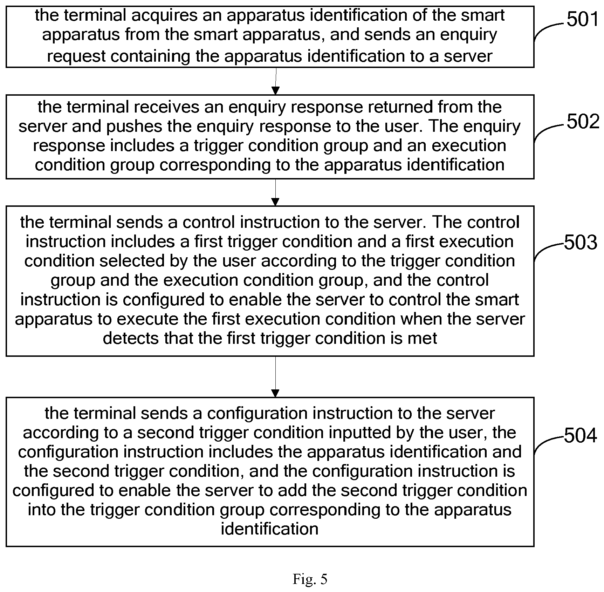

Fig. 5 is a flow chart showing a method for controlling a smart apparatus, according to another exemplary embodiment. As shown in Fig. 5, the method for controlling a smart apparatus applied in a terminal is taken as an example for illustration in this embodiment. The method for controlling a smart apparatus may include the following steps.

In step 501, a terminal acquires an apparatus identification of the smart apparatus from the smart apparatus, and sends an enquiry request containing the apparatus identification to a server.

In step 502, the terminal receives an enquiry response returned from the server and pushes the enquiry response to the user. The enquiry response includes a trigger condition group and an execution condition group corresponding to the apparatus identification.

In step 503, the terminal sends a control instruction to the server. The control instruction includes a first trigger condition and a first execution condition selected by the user according to the trigger condition group and the execution condition group, and the control instruction is configured to enable the server to control the smart apparatus to execute the first execution condition when the server detects that the first trigger condition is met.

In step 504, the terminal sends a configuration instruction to the server according to a second trigger condition inputted by the user. The configuration instruction includes the apparatus identification and the second trigger condition, and the configuration instruction is configured to enable the server to add the second trigger condition into the trigger condition group corresponding to the apparatus identification.

Step 504 may be executed at anytime after step 501 that the terminal acquires the apparatus identification of the smart apparatus from the smart apparatus, which is not restricted in the embodiment.

Take a practical scene for example. If the user needs to set the trigger condition for certain smart apparatus, he or she may use the terminal to acquire the apparatus identification of the smart apparatus, and input the second trigger condition via an interactive interface of the terminal. The terminal sends the configuration instruction including the apparatus identification and the second trigger condition set by the user to the server, and the server adds the second trigger condition set by the user into the trigger condition group supported by the smart apparatus according to the configuration instruction.

It should be noted that, this embodiment may be combined with any one of embodiments as shown in Figs. 1-4. For example specifically, based on any one of methods described above, the terminal may acquire the apparatus identification of the smart apparatus, and sends the configuration instruction including the apparatus identification and the second trigger condition to the server, and the server updates the trigger condition group supported by the smart apparatus according to the configuration instruction.

The method for the server involved in this embodiment may refer to related contents in following embodiments, which will not be described herein.

In conclusion, with the method for controlling a smart apparatus according to the embodiment of the present disclosure, the terminal sends the configuration instruction including the apparatus identification of the smart apparatus and the second trigger condition set by the user to the server, and the server adds the second trigger condition set by the user into the trigger condition group supported by the smart apparatus according to the configuration instruction, thus configuring the trigger condition group supported by the smart apparatus according to a user's requirement, and realizing the individuation and flexibility of smart home.

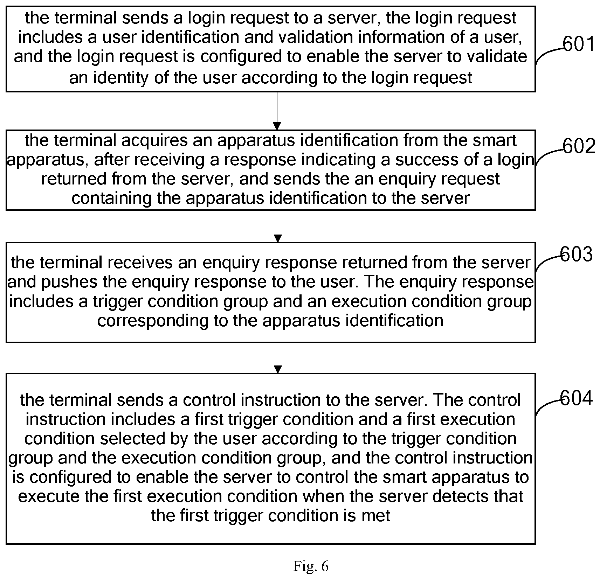

Fig. 6 is a flow chart showing a method for controlling a smart apparatus, according to another exemplary embodiment. As shown in Fig. 6, the method for controlling a smart apparatus applied in a terminal is taken as an example for illustration in this embodiment. The method for controlling a smart apparatus may include the following steps.

In step 601, the terminal sends a login request to a server. The login request includes a user identification and validation information of a user, and the login request is configured to enable the server to validate an identity of the user according to the login request.

In step 602, the terminal acquires an apparatus identification from the smart apparatus after receiving a response indicating a success of a login returned from the server, and sends the an enquiry request containing the apparatus identification to the server.

In step 603, the terminal receives an enquiry response returned from the server and pushes the enquiry response to the user. The enquiry response includes a trigger condition group and an execution condition group corresponding to the apparatus identification.

In step 604, the terminal sends a control instruction to the server. The control instruction includes a first trigger condition and a first execution condition selected by the user according to the trigger condition group and the execution condition group, and the control instruction is configured to enable the server to control the smart apparatus to execute the first execution condition when the server detects that the first trigger condition is met.

Take a practical scene for example. Before acquiring the apparatus identification, the user sends the login request to the server via the terminal. The login request is configured to enable the server to validate the identity of the user according to the login request. Specifically, the login request may include the user identification and the validation information. The user identification may be identical with that of the above embodiments, and the validation information may be a login password set by the user during registration. The server validates the identity of the user according to the login request, and returns the response indicating the success of the login to the terminal after the validation succeeds. After receiving the response indicating the success of the login, the terminal acquires the apparatus identification from the smart apparatus and executes subsequent steps in the method for controlling a smart apparatus.

It should be noted that, this embodiment may be combined with any one of embodiments as shown in Figs. 1-5. For example specifically, the terminal sends the login request for validating the identity of the user to the server, after the login succeeds, based on any one of methods described above, the terminal may acquire the apparatus identification of the smart apparatus and executes subsequent steps in the method for controlling a smart apparatus.

The method for the server involved in this embodiment may refer to related contents in following embodiments, which will not be described herein.

In conclusion, with the method for controlling a smart apparatus according to the embodiment of the present disclosure, the terminal sends the login request including the user identification and the validation information to the server, the server validates the identity of the user according to the login request, and after the login succeeds, the terminal executes subsequent steps in the method for controlling a smart apparatus. By validating the identity of the user before controlling the smart apparatus, the security of smart home is further increased.

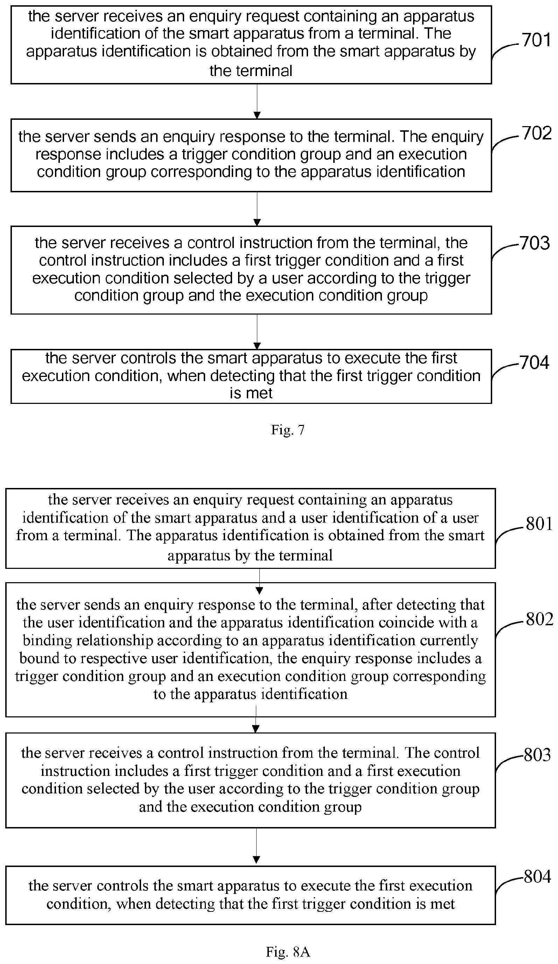

Fig. 7 is a flow chart showing a method for controlling a smart apparatus, according to an exemplary embodiment. As shown in Fig. 7, the method for controlling a smart apparatus applied in a server is taken as an example for illustration in this embodiment. The method for controlling a smart apparatus may include the following steps.

In step 701, the server receives an enquiry request containing an apparatus identification of the smart apparatus from a terminal. The apparatus identification is obtained from the smart apparatus by the terminal.

In step 702, the server sends an enquiry response to the terminal. The enquiry response includes a trigger condition group and an execution condition group corresponding to the apparatus identification.

In step 703, the server receives a control instruction from the terminal. The control instruction includes a first trigger condition and a first execution condition selected by a user according to the trigger condition group and the execution condition group.

In step 704, the server controls the smart apparatus to execute the first execution condition, when detecting that the first trigger condition is met.

The apparatus identification is for characterizing the smart apparatus, for example, the apparatus identification may be an MAC (Media Access Control) address for the smart apparatus. The number of the trigger conditions in the trigger condition group or the number of or the execution conditions in the execution condition group may be at least one.

Take a practical application scene for example. The scene refers to a smart home scene, which may include a large number of smart apparatuses.

The terminal acquires the apparatus identification of the smart apparatus from the smart apparatus, and sends the enquiry request containing the apparatus identification to the server, the server searches trigger condition groups and execution condition groups corresponding to apparatus identifications of respective smart apparatuses for the trigger condition group and the execution condition group corresponding to the apparatus identification, i.e., a trigger condition group and an execution condition group supported by the smart apparatus, and returns them to the terminal. After receiving the enquiry response, the terminal pushes the trigger condition group and the execution condition group supported by the smart apparatus to the user, and the user may select the first trigger condition and the first execution condition needing to be configured from the trigger condition group and the execution condition group supported by the smart apparatus. The terminal encloses the first trigger condition and the first execution condition selected by the user into the control instruction and sends the control instruction to the server. According to the control instruction, the server controls the smart apparatus to execute the first execution condition, thus implementing smart home, when detecting that the first trigger condition is met.

Specifically, the execution condition group supported by the smart apparatus may be decided by apparatus performances, and the trigger condition group supported by the smart apparatus may be predetermined or may be determined according to the user's requirement.

In this embodiment, when wishing to control certain smart apparatus, the user may directly obtain the apparatus identification of the smart apparatus from the smart apparatus via the terminal, the terminal obtains the trigger condition group and the execution condition group supported by the smart apparatus for the user to select by sending the enquiry request to the server, and the user sends the first trigger condition and the first execution condition selected to the server via the terminal, thus implementing the smart control for the smart apparatus.

With the solution based on the present embodiment, in the scene including a large number of smart apparatuses, it is not required for the user to manually identify the apparatus identification of the smart apparatus that he or she wants to control from the apparatus identification list including apparatus identifications of a large number of smart apparatuses, instead, the user may acquire a corresponding apparatus identification conveniently and accurately from the smart apparatus that he or she wants to control, thus improving a convenience and reliability of the smart apparatus control. Moreover, with the solution based on the present embodiment, the trigger condition groups and the execution condition groups supported by respective smart apparatuses may be stored in the server, thus further effectively saving a storage resource of the terminal.

The terminal may acquire the apparatus identification from the smart apparatus via various manners, which may refer to the embodiments above. The method for the terminal involved in this embodiment may refer to related contents in above embodiments, which will not be described herein.

In conclusion, with the method for controlling a smart apparatus according to the embodiment of the present disclosure, the user may obtain the apparatus identification of the smart apparatus from the smart apparatus required to be controlled via the terminal, the terminal obtains the trigger condition group and the execution condition group supported by the smart apparatus from the server according to the apparatus identification, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

Fig. 8A is a flow chart showing a method for controlling a smart apparatus, according to another exemplary embodiment. As shown in Fig. 8A, the method for controlling a smart apparatus applied in a server is taken as an example for illustration in this embodiment. The method for controlling a smart apparatus may include the following steps.

In step 801, the server receives an enquiry request containing an apparatus identification of the smart apparatus and a user identification of a user from a terminal. The apparatus identification is obtained from the smart apparatus by the terminal.

In step 802, the server sends an enquiry response to the terminal, after detecting that the user identification and the apparatus identification coincide with a binding relationship according to an apparatus identification currently bound to respective user identification. The enquiry response includes a trigger condition group and an execution condition group corresponding to the apparatus identification.

In step 803, the server receives a control instruction from the terminal. The control instruction includes a first trigger condition and a first execution condition selected by the user according to the trigger condition group and the execution condition group.

In step 804, the server controls the smart apparatus to execute the first execution condition, when detecting that the first trigger condition is met.

The user identification refers to an identification characterizing an identity of the user, such as an ID number of the user or a user name of the user. Specifically, the terminal may acquire the user identification pre-stored directly, or may receive the user identification inputted by the user via an interactive interface.

Take a practical scene for example. After acquiring the apparatus identification of the smart apparatus from the smart apparatus, the terminal sends an enquiry request containing the apparatus identification and the user identification to the server. The server inquires apparatus identifications currently bound to respective user identifications according to the enquiry request received. The binding relationship between the user identification and the apparatus identification mentioned herein is for characterizing an ownership between the smart apparatus and the user. If determining that the apparatus identification belongs to one of apparatus identifications currently bound to the user identification, the server returns the enquiry response to the terminal.

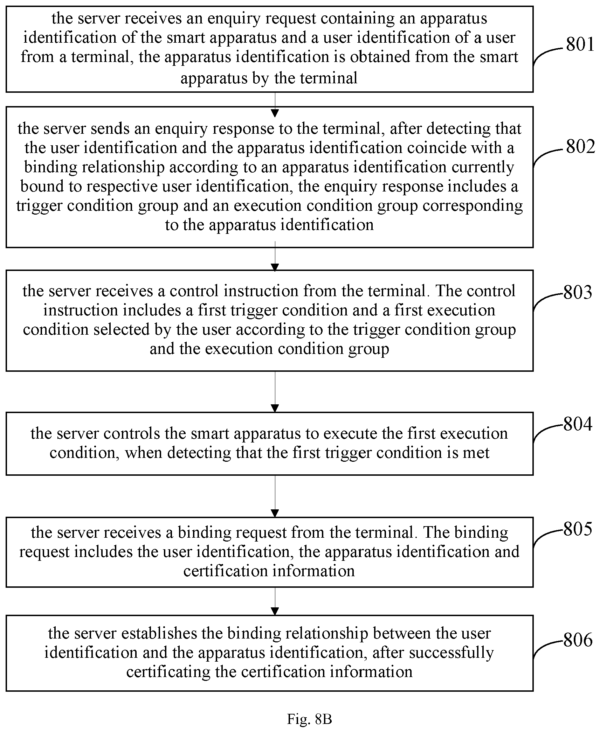

In order to establish the binding relationship between respective user identification and respective apparatus identification, as shown in Fig. 8B, Fig. 8B is a flow chart showing a method for controlling a smart apparatus, according to another exemplary embodiment. Based on the embodiment shown in Fig. 8A, the method for controlling a smart apparatus may include following steps.

In step 805, the server receives a binding request from the terminal. The binding request includes the user identification, the apparatus identification and certification information.

In step 806, the server establishes the binding relationship between the user identification and the apparatus identification, after successfully certificating the certification information.

In practice, the certification information is used for certifying the ownership between the user and the smart apparatus.

It should be noted that, this embodiment may be combined with the embodiment as shown in Fig. 7. For example specifically, based on any one of methods described above, the terminal may acquire the apparatus identification of the smart apparatus, and sends the enquiry request containing the apparatus identification and the user identification to the server. The server validates the ownership between the user and the smart apparatus according to the enquiry request. If the validation succeeds, the server returns the enquiry response to the terminal.

The method for the terminal involved in this embodiment may refer to related contents in above embodiments, which will not be described herein.

In conclusion, with the method for controlling a smart apparatus according to the embodiment of the present disclosure, the ownership between the smart apparatus and the user is certificated according to the certification information in the binding request, and the binding relationship between the user and the smart apparatus is established after the certification succeeds. Subsequently, when receiving the enquiry request from the terminal, the server first determines that the smart apparatus needing to be controlled belongs to the user according to the binding relationship between respective user identification and respective apparatus identification, and then executes following smart apparatus control solution, thus improving the security of smart home.

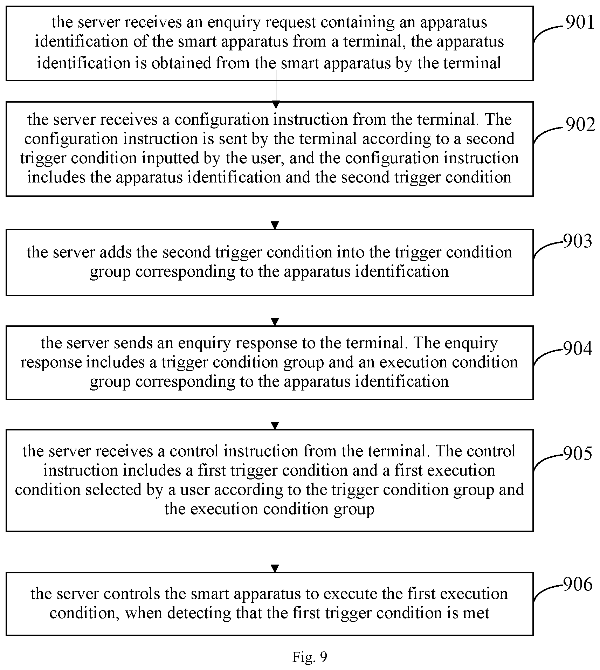

Fig. 9 is a flow chart showing a method for controlling a smart apparatus, according to another exemplary embodiment. As shown in Fig. 9, the method for controlling a smart apparatus applied in a server is taken as an example for illustration in this embodiment. The method for controlling a smart apparatus may include the following steps.

In step 901, the server receives an enquiry request containing an apparatus identification of the smart apparatus from a terminal. The apparatus identification is obtained from the smart apparatus by the terminal.

In step 902, the server receives a configuration instruction from the terminal. The configuration instruction is sent by the terminal according to a second trigger condition inputted by the user, and the configuration instruction includes the apparatus identification and the second trigger condition.

In step 903, the server adds the second trigger condition into the trigger condition group corresponding to the apparatus identification.

In step 904, the server sends an enquiry response to the terminal. The enquiry response includes a trigger condition group and an execution condition group corresponding to the apparatus identification.

In step 905, the server receives a control instruction from the terminal. The control instruction includes a first trigger condition and a first execution condition selected by a user according to the trigger condition group and the execution condition group.

In step 906, the server controls the smart apparatus to execute the first execution condition, when detecting that the first trigger condition is met.

Step 902 and step 903 may be executed at anytime after the terminal acquires the apparatus identification of the smart apparatus from the smart apparatus, which is not restricted in the embodiment.

Take a practical scene for example. If the user needs to set the trigger condition for certain smart apparatus, he or she may use the terminal to acquire the apparatus identification of the smart apparatus, and input the second trigger condition via an interactive interface of the terminal. The terminal sends the configuration instruction including the apparatus identification and the second trigger condition set by the user to the server, and the server adds the second trigger condition set by the user into the trigger condition group supported by the smart apparatus according to the configuration instruction.

It should be noted that, this embodiment may be combined with any one of embodiments as shown in Fig. 7, Fig. 8A and Fig. 8B. For example specifically, the terminal may acquire the apparatus identification of the smart apparatus, and sends the configuration instruction including the apparatus identification and the second trigger condition to the server, and the server updates the trigger condition group supported by the smart apparatus according to the configuration instruction.

The method for the terminal involved in this embodiment may refer to related contents in above embodiments, which will not be described herein.

In conclusion, with the method for controlling a smart apparatus according to the embodiment of the present disclosure, the terminal sends the configuration instruction including the apparatus identification of the smart apparatus and the second trigger condition set by the user to the server, and the server adds the second trigger condition set by the user into the trigger condition group supported by the smart apparatus according to the configuration instruction, thus configuring the trigger condition group supported by the smart apparatus according to a user's requirement, and realizing the individuation and flexibility of smart home.

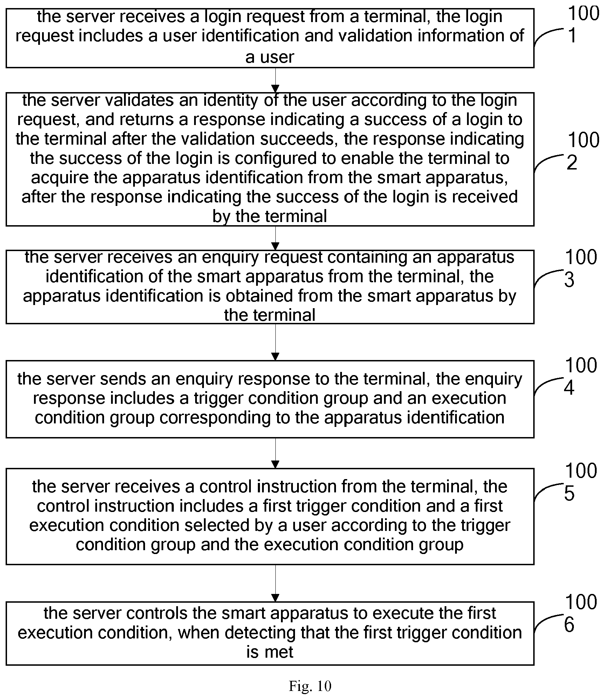

Fig. 10 is a flow chart showing a method for controlling a smart apparatus, according to another exemplary embodiment. As shown in Fig. 10, the method for controlling a smart apparatus applied in a server is taken as an example for illustration in this embodiment. The method for controlling a smart apparatus may include the following steps.

In step 1001, the server receives a login request from a terminal. The login request includes a user identification and validation information of a user.

In step 1002, the server validates an identity of the user according to the login request, and returns a response indicating a success of a login to the terminal after the validation succeeds. The response indicating the success of the login is configured to enable the terminal to acquire the apparatus identification from the smart apparatus, after the response indicating the success of the login is received by the terminal.

In step 1003, the server receives an enquiry request containing an apparatus identification of the smart apparatus from the terminal. The apparatus identification is obtained from the smart apparatus by the terminal.

In step 1004, the server sends an enquiry response to the terminal. The enquiry response includes a trigger condition group and an execution condition group corresponding to the apparatus identification.

In step 1005, the server receives a control instruction from the terminal. The control instruction includes a first trigger condition and a first execution condition selected by a user according to the trigger condition group and the execution condition group.

In step 1006, the server controls the smart apparatus to execute the first execution condition, when detecting that the first trigger condition is met.

Take a practical scene for example. Before acquiring the apparatus identification, the user sends the login request to the server via the terminal. The login request is configured to enable the server to validate the identity of the user according to the login request. Specifically, the login request may include the user identification and the validation information. The user identification may be identical with that of the above embodiments, and the validation information may be a login password set by the user during registration. The server validates the identity of the user according to the login request, and returns the response indicating the success of the login to the terminal after the validation succeeds. After receiving the response indicating the success of the login, the terminal acquires the apparatus identification from the smart apparatus and executes subsequent steps in the method for controlling a smart apparatus.

It should be noted that, this embodiment may be combined with any one of embodiments as shown in Figs. 7-9. For example specifically, the server validates the identity of the user according to the login request for validating the identity of the user from the terminal, indicates the terminal to acquire the apparatus identification of the smart apparatus after the validation succeeds, and executes subsequent steps in the method for controlling a smart apparatus.

The method for the terminal involved in this embodiment may refer to related contents in above embodiments, which will not be described herein.

In conclusion, with the method for controlling a smart apparatus according to the embodiment of the present disclosure, the terminal sends the login request including the user identification and the validation information to the server, the server validates the identity of the user according to the login request, and after the login succeeds, the terminal executes subsequent steps in the method for controlling a smart apparatus. By validating the identity of the user before controlling the smart apparatus, the security of smart home is further increased.

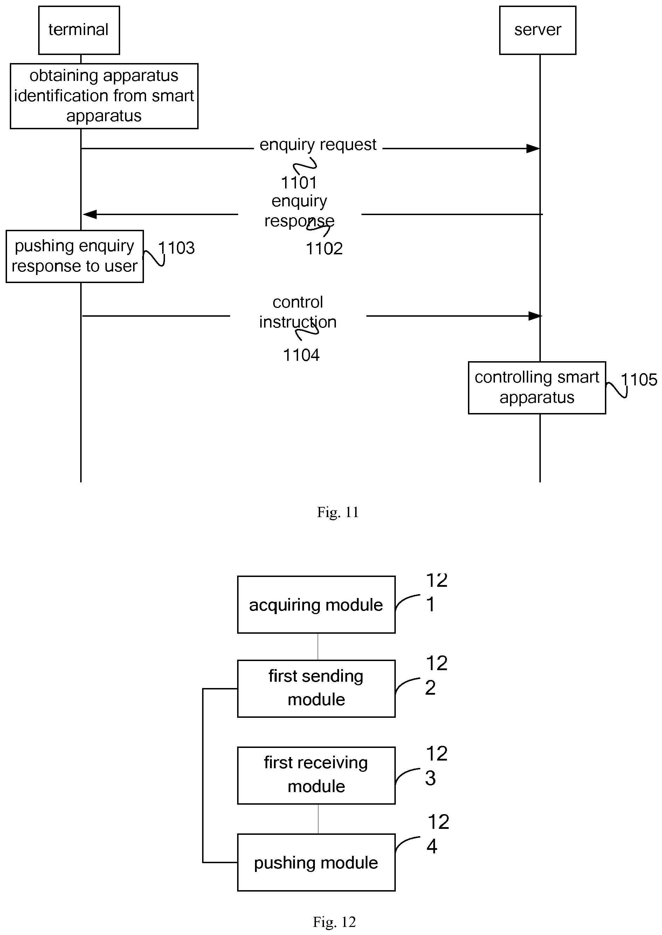

Fig. 11 is a flow chart showing a method for controlling a smart apparatus, according to an exemplary embodiment. As shown in Fig. 11, the method for controlling a smart apparatus applied in a terminal and a server is taken as an example for illustration in this embodiment. The method for controlling a smart apparatus may include the following steps.

In step 1101, a terminal acquires an apparatus identification of the smart apparatus from the smart apparatus, and sends an enquiry request containing the apparatus identification to a server.

In step 1102, the server sends an enquiry response to the terminal. The enquiry response includes a trigger condition group and an execution condition group corresponding to the apparatus identification.

In step 1103, the terminal pushes the enquiry response to the user.

In step 1104, the terminal sends a control instruction to the server. The control instruction includes a first trigger condition and a first execution condition selected by the user according to the trigger condition group and the execution condition group.

In step 1105, the server controls the smart apparatus to execute the first execution condition, when detecting that the first trigger condition is met.

In conclusion, with the method for controlling a smart apparatus according to the embodiment of the present disclosure, the user may obtain the apparatus identification of the smart apparatus from the smart apparatus required to be controlled via the terminal, the terminal obtains the trigger condition group and the execution condition group supported by the smart apparatus from the server according to the apparatus identification, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

The implementation of the method for controlling a smart apparatus is described above. The method may be implemented via the terminal and the server, and internal functions and structures of the terminal and the server will be illustrated below.

Fig. 12 is a block diagram illustrating a terminal, according to an exemplary embodiment. As shown in Fig. 12, the terminal includes: an acquiring module 121, configured to acquire an apparatus identification of a smart apparatus from the smart apparatus; a first sending module 122, configured to send an enquiry request containing the apparatus identification to a server; a first receiving module 123, configured to receive an enquiry response returned from the server, the enquiry response including a trigger condition group and an execution condition group corresponding to the apparatus identification; a pushing module 124, configured to push the enquiry response to a user; the first sending module 122, further configured to send a control instruction to the server, the control instruction including a first trigger condition and a first execution condition selected by the user according to the trigger condition group and the execution condition group, the control instruction configured to enable the server to control the smart apparatus to execute the first execution condition when the server detects that the first trigger condition is met.

The apparatus identification is for characterizing the smart apparatus, for example, the apparatus identification may be an MAC (Media Access Control) address for the smart apparatus.

Take a practical application scene for example. The scene refers to a smart home scene, which may include a large number of smart apparatuses.

In this embodiment, the acquiring module 121 acquires the apparatus identification of the smart apparatus from the smart apparatus, the first sending module 122 sends the enquiry request containing the apparatus identification to the server, the server searches for a trigger condition group and an execution condition group supported by the smart apparatus according to the apparatus identification in the enquiry request, and the server returns an enquiry response including the trigger condition group and the execution condition group supported by the smart apparatus to the terminal. After the first receiving module 123 receives the enquiry response, the pushing module 124 pushes the trigger condition group and the execution condition group supported by the smart apparatus to the user, the user selects the first trigger condition and the first execution condition required to be configured therefrom. The first sending module 122 includes the first trigger condition and the first execution condition selected by the user into the control instruction and sends the control instruction to the server. According to the control instruction, the server controls the smart apparatus to execute the first execution condition, thus implementing smart home, when detecting that the first trigger condition is met.

In practice, in the scene including a large number of smart apparatuses, if a conventional solution is applied that the user identifies the apparatus identification of the smart apparatus that he or she wants to control from an apparatus identification list including apparatus identifications of a large number of smart apparatuses, not only the efficiency is low, but also a false identification is easy to occur.

However, with the solution based on the present embodiment, in the scene including a large number of smart apparatuses, it is not required for the user to manually identify the apparatus identification of the smart apparatus that he or she wants to control from the apparatus identification list including apparatus identifications of a large number of smart apparatuses, instead, the user may acquire a corresponding apparatus identification conveniently and accurately from the smart apparatus that he or she wants to control, thus improving a convenience and reliability of the smart apparatus control. Moreover, with the solution based on the present embodiment, the trigger condition groups and the execution condition groups supported by respective smart apparatuses may be stored in the server, thus further effectively saving a storage resource of the terminal.

In conclusion, the terminal according to the embodiment of the present disclosure obtains the apparatus identification of the smart apparatus from the smart apparatus required to be controlled by the user, the terminal obtains the trigger condition group and the execution condition group supported by the smart apparatus from the server according to the apparatus identification, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

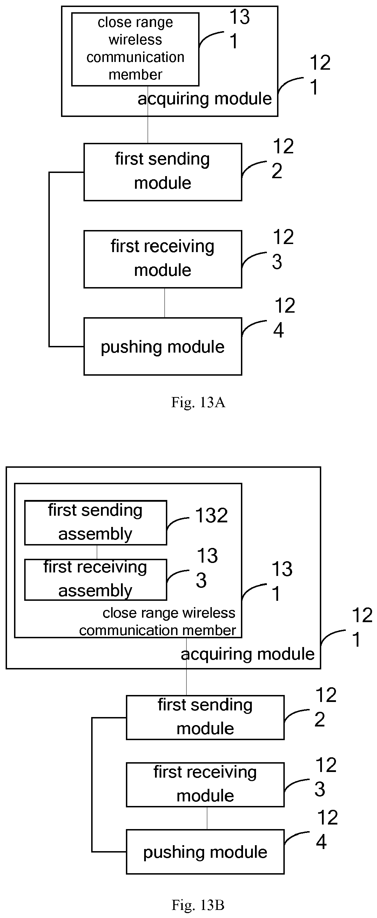

Fig. 13A is a block diagram illustrating a terminal, according to another exemplary embodiment. As shown in Fig. 13A, based on the embodiment shown in Fig. 12, the acquiring module 121 includes: a close range wireless communication member 131, configured to perform a close range wireless communication with the smart apparatus to acquire the apparatus identification.

The close range wireless communication between the terminal and the smart apparatus may include many manners.

Alternatively, an NFC may be applied to realize the close range wireless communication. Accordingly, as shown in Fig. 13B, Fig. 13B is a block diagram illustrating a terminal, according to another exemplary embodiment. Based on the embodiment shown in Fig. 13A, the close range wireless communication member 131 includes: a first sending assembly 132, configured to send an NFC link request to the smart apparatus to establish an NFC link with the smart apparatus, further configured to send a first acquiring request to the smart apparatus via the NFC link; and a first receiving assembly 133, configured to receive a first acquiring response returned from the smart apparatus via the NFC link, the first acquiring response including the apparatus identification.

In practice, the first sending assembly 132 sends the NFC link request to an NFC tag of the smart apparatus. In this way, an NFC link between the terminal and the smart apparatus may be established, and thus a data communication therebetween is realized based on the NFC link. Specifically, the first sending assembly 132 sends the acquiring request to the NFC tag of the smart apparatus via the NFC link, and the smart apparatus sends the apparatus identification stored in itself to the first receiving assembly 133 via the NFC tag according to the acquiring request, thus enabling the terminal to acquire the apparatus identification of the smart apparatus in a convenient and accurate way.

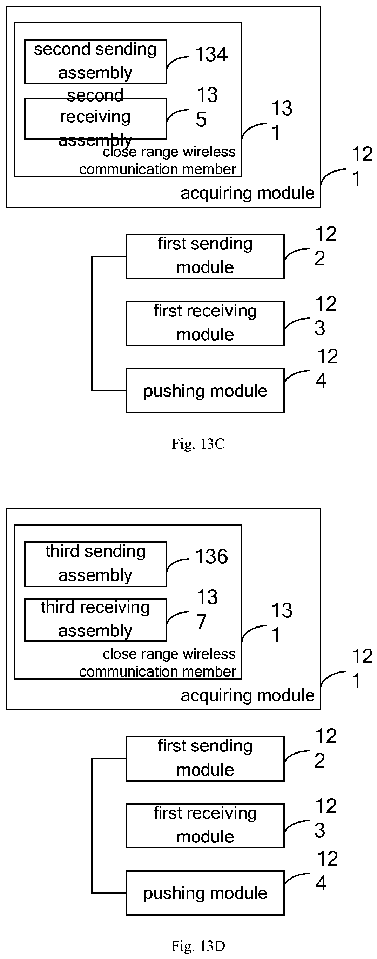

Yet alternatively, an RFID (Radio Frequency Identification) may be applied to realize the close range wireless communication. Accordingly, as shown in Fig. 13C, Fig. 13C is a block diagram illustrating a terminal, according to another exemplary embodiment. Based on the embodiment shown in Fig. 13A, the close range wireless communication member 131 includes: a second sending assembly 134, configured to send an RF signal to an RFID tag of the smart apparatus, in which the apparatus identification of the smart apparatus is stored in the RFID tag; and a second receiving assembly 135, configured to receive the apparatus identification returned from the RFID tag according to the RF signal.

In practice, the second sending assembly 134 sends the RF signal to the RFID tag of the smart apparatus, the RFID tag of the smart apparatus sends the apparatus identification stored in itself to the second receiving assembly 135 according to the RF signal, thus enabling the terminal to acquire the apparatus identification of the smart apparatus in a convenient and accurate way.

Yet alternatively, a Bluetooth may be applied to realize the close range wireless communication. Accordingly, as shown in Fig. 13D, Fig. 13D is a block diagram illustrating a terminal, according to another exemplary embodiment. Based on the embodiment shown in Fig. 13A, the close range wireless communication member 131 includes: a third sending assembly 136, configured to send a matching request to the smart apparatus and establish a Bluetooth link with the smart apparatus according to a matching response returned from the smart apparatus, further configured to send a second acquiring request to the smart apparatus via the Bluetooth link; and a third receiving assembly 137, configured to receive a second acquiring response returned from the smart apparatus via the Bluetooth link, the second acquiring response including the apparatus identification.

In practice, the third sending assembly 136 sends the matching request to the smart apparatus. In this way, a Bluetooth link between the terminal and the smart apparatus may be established according to the matching response returned from the smart apparatus, and thus a data communication therebetween is realized based on the Bluetooth link. Specifically, the third sending assembly 136 sends the acquiring request to the smart apparatus via the Bluetooth link, and the smart apparatus sends the apparatus identification stored in itself to the third receiving assembly 137 via the Bluetooth link according to the acquiring request, thus enabling the terminal to acquire the apparatus identification of the smart apparatus in a convenient and accurate way.

In conclusion, with the terminal according to the embodiment of the present disclosure, by using the close range wireless communication manner, the apparatus identification of the smart apparatus that the user wants to control is obtained. In other words, the user may only stay around the smart apparatus, and obtains the apparatus identification of the smart apparatus via sweeping with the terminal, so as to implement a control for the smart apparatus in a convenient and accurate way.

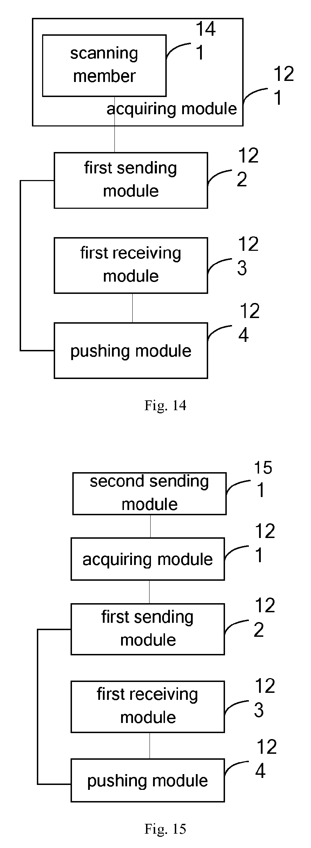

Fig. 14 is a block diagram illustrating a terminal, according to another exemplary embodiment. As shown in Fig. 14, based on the embodiment shown in Fig. 12, the acquiring module 121 includes: a scanning member 141, configured to scan a two-dimension code of the smart apparatus to acquire the apparatus identification.

In practice, the apparatus identification of the smart apparatus may be written into the two-dimension code, and the two-dimension code is disposed on the smart apparatus. Accordingly, the user may only use the scanning member 141 of the terminal to scan the two-dimension code of the smart apparatus, so as to read the apparatus identification of the smart apparatus.

In conclusion, with the terminal according to the embodiment of the present disclosure, by scanning the two-dimension code of the smart apparatus, the apparatus identification of the smart apparatus may be obtained, thus implementing a control for the smart apparatus in a convenient and accurate way.

Fig. 15 is a block diagram illustrating a terminal, according to another exemplary embodiment. As shown in Fig. 15, based on any one of embodiments shown in Figs. 12-14, the enquiry request further includes a user identification of the user, and the enquiry response is returned by the server after the server detects that the user identification and the apparatus identification coincide with a binding relationship according to an apparatus identification currently bound to respective user identification. The terminal further includes: a second sending module 151, configured to send a binding request to the server. The binding request includes the user identification, the apparatus identification and certification information, and the binding request is configured to enable the server to establish the binding relationship between the user identification and the apparatus identification, after the certification information is successfully certificated by the server.

The user identification refers to an identification characterizing an identity of the user. Specifically, the terminal may acquire the user identification pre-stored directly, or may receive the user identification inputted by the user via an interactive interface.

In practice, the certification information is used for certifying the ownership between the user and the smart apparatus. Take a practical scene for example. After the first acquiring module 121 acquires the apparatus identification of the smart apparatus from the smart apparatus, the first sending module 122 sends an enquiry request containing the apparatus identification and the user identification to the server. The server inquires apparatus identifications currently bound to respective user identifications according to the enquiry request received. The binding relationship between the user identification and the apparatus identification mentioned herein is for characterizing an ownership between the smart apparatus and the user. If determining that the apparatus identification belongs to one of apparatus identifications currently bound to the user identification, the server returns the enquiry response to the terminal.

In conclusion, the terminal according to the embodiment of the present disclosure sends the binding request including the user identification, the certification information and the apparatus identification to the server, and the server certificates the ownership between the smart apparatus and the user according to the certification information in the binding request, and the binding relationship between the user and the smart apparatus is established after the certification succeeds. Subsequently, when receiving the enquiry request from the terminal, the server first determines that the smart apparatus needing to be controlled belongs to the user according to the binding relationship between respective user identification and respective apparatus identification, and then executes following smart apparatus control solution, thus improving the security of smart home.

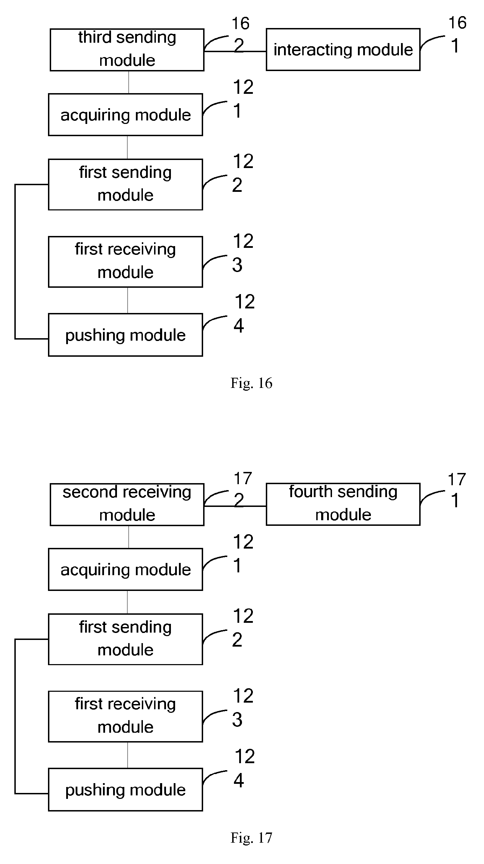

Fig. 16 is a block diagram illustrating a terminal, according to another exemplary embodiment. As shown in Fig. 16, based on any one of embodiments shown in Figs. 12-15, the terminal further includes: an interacting module 161, configured to receive a second trigger condition inputted by the user, after the apparatus identification of the smart apparatus is acquired from the smart apparatus by the acquiring module; and a third sending module 162, configured to send a configuration instruction to the server according to the second trigger condition, the configuration instruction including the apparatus identification and the second trigger condition, and the configuration instruction configured to enable the server to add the second trigger condition into the trigger condition group corresponding to the apparatus identification.

Take a practical scene for example. If the user needs to set the trigger condition for certain smart apparatus, he or she may use the terminal to acquire the apparatus identification of the smart apparatus from the smart apparatus, and input the second trigger condition via the interacting module 161. The third sending module 162 sends the configuration instruction including the apparatus identification and the second trigger condition set by the user to the server, and the server adds the second trigger condition set by the user into the trigger condition group supported by the smart apparatus according to the configuration instruction.

In conclusion, the terminal according to the embodiment of the present disclosure sends the configuration instruction including the apparatus identification of the smart apparatus and the second trigger condition set by the user to the server, and the server adds the second trigger condition set by the user into the trigger condition group supported by the smart apparatus according to the configuration instruction, thus configuring the trigger condition group supported by the smart apparatus according to a user's requirement, and realizing the individuation and flexibility of smart home.

Fig. 17 is a block diagram illustrating a terminal, according to another exemplary embodiment. As shown in Fig. 17, based on any one of embodiments shown in Figs. 12-16, the terminal further includes: a fourth sending module 171, configured to send a login request to the server, the login request including a user identification and validation information of the user, and the login request configured to enable the server to validate an identity of the user according to the login request; and a second receiving module 172, configured to receive a response indicating a success of a login returned from the server. The acquiring module 121 is configured to acquire the apparatus identification from the smart apparatus, after the response indicating the success of the login is received by the second receiving module 172.

Take a practical scene for example. Before acquiring the apparatus identification, the fourth sending module 171 sends the login request to the server. The login request is configured to enable the server to validate the identity of the user according to the login request. The server validates the identity of the user according to the login request, and returns the response indicating the success of the login to the terminal after the validation succeeds. After the second receiving module 172 receives the response indicating the success of the login, the acquiring module 121 acquires the apparatus identification from the smart apparatus and executes subsequent steps in the method for controlling a smart apparatus.

In conclusion, the terminal according to the embodiment of the present disclosure sends the login request including the user identification and the validation information to the server, the server validates the identity of the user according to the login request, and after the login succeeds, the terminal executes corresponding steps in the method for controlling a smart apparatus. By validating the identity of the user before controlling the smart apparatus, the security of smart home is further increased.

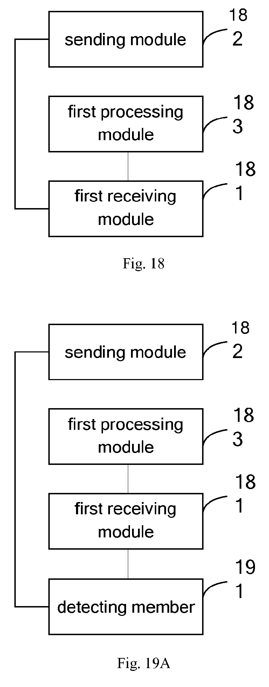

Fig. 18 is a block diagram illustrating a server, according to an exemplary embodiment. As shown in Fig. 18, the server includes: a first receiving module 181, configured to receive an enquiry request containing an apparatus identification of a smart apparatus from a terminal, the apparatus identification obtained from the smart apparatus by the terminal; a sending module 182, configured to send an enquiry response to the terminal, the enquiry response including a trigger condition group and an execution condition group corresponding to the apparatus identification; and a first processing module 183; in which the first receiving module 181 is configured to receive a control instruction from the terminal, the control instruction including a first trigger condition and a first execution condition selected by a user according to the trigger condition group and the execution condition group; and the first processing module 183 is configured to control the smart apparatus to execute the first execution condition, when detecting that the first trigger condition is met.

The apparatus identification is for characterizing the smart apparatus, for example, the apparatus identification may be an MAC (Media Access Control) address for the smart apparatus.

With the solution based on the present embodiment, in the scene including a large number of smart apparatuses, it is not required for the user to manually identify the apparatus identification of the smart apparatus that he or she wants to control from the apparatus identification list including apparatus identifications of a large number of smart apparatuses, instead, the user may acquire a corresponding apparatus identification conveniently and accurately from the smart apparatus that he or she wants to control, thus improving a convenience and reliability of the smart apparatus control. Moreover, with the solution based on the present embodiment, the trigger condition groups and the execution condition groups supported by respective smart apparatuses may be stored in the server, thus further effectively saving a storage resource of the terminal.

The terminal may acquire the apparatus identification from the smart apparatus via various manners, which may refer to the embodiments above.

In conclusion, the server according to the embodiment of the present disclosure receives the apparatus identification obtained by the terminal from the smart apparatus needing to be controlled, and returns the trigger condition group and the execution condition group supported by the smart apparatus to the terminal, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

Fig. 19A is a block diagram illustrating a server, according to another exemplary embodiment. As shown in Fig. 19A, based on the embodiment shown in Fig. 18, the enquiry request further includes a user identification of the user; the server further includes: a detecting member 191, configured to detect whether the user identification and the apparatus identification coincide with a binding relationship according to an apparatus identification currently bound to respective user identification. The sending module 182 is configured to send the enquiry response to the terminal, after the detecting member detects that the user identification and the apparatus identification coincide with the binding relationship.

The user identification refers to an identification characterizing an identity of the user.

Take a practical scene for example. After acquiring the apparatus identification of the smart apparatus from the smart apparatus, the terminal sends an enquiry request containing the apparatus identification and the user identification to the server. The detecting member 191 inquires apparatus identifications currently bound to respective user identifications according to the enquiry request received by the first receiving module 181. The binding relationship between the user identification and the apparatus identification mentioned herein is for characterizing an ownership between the smart apparatus and the user. After the detecting member 191 determines that the apparatus identification belongs to one of apparatus identifications currently bound to the user identification, the sending module 182 returns the enquiry response to the terminal.

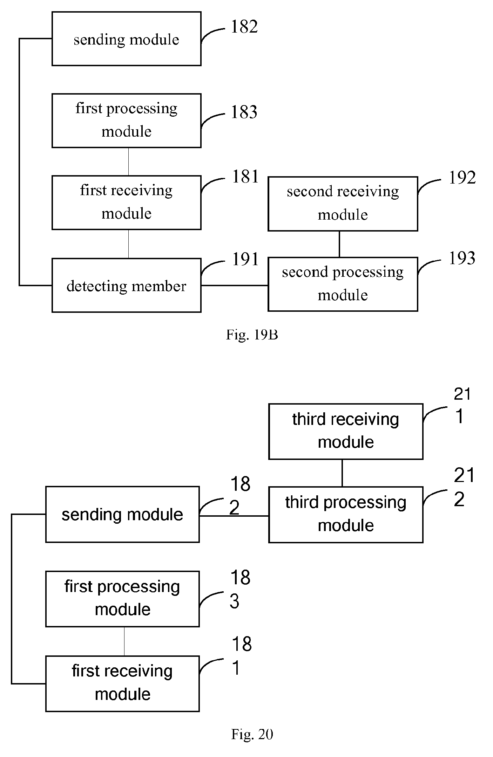

In order to establish the binding relationship between respective user identification and respective apparatus identification, as shown in Fig. 19B, Fig. 19B is a block diagram illustrating a server, according to another exemplary embodiment. Based on the embodiment shown in Fig. 19A, the server further includes: a second receiving module 192, configured to receive a binding request from the terminal, the binding request including the user identification, the apparatus identification and certification information; and a second processing module 193, configured to certificate the certification information, and establish the binding relationship between the user identification and the apparatus identification after the certification information is successfully certificated.

In practice, the certification information is used for certifying the ownership between the user and the smart apparatus.

In conclusion, with the server according to the embodiment of the present disclosure, the ownership between the smart apparatus and the user is certificated according to the certification information in the binding request, and the binding relationship between the user and the smart apparatus is established after the certification succeeds. Subsequently, when receiving the enquiry request from the terminal, the server first determines that the smart apparatus needing to be controlled belongs to the user according to the binding relationship between respective user identification and respective apparatus identification, and then executes following smart apparatus control solution, thus improving the security of smart home.

Fig. 20 is a block diagram illustrating a server, according to another exemplary embodiment. As shown in Fig. 20, based on the embodiments shown in Fig. 18, Fig. 19A or Fig. 19B, the server further includes: a third receiving module 211, configured to receive a configuration instruction from the terminal, in which the configuration instruction is sent by the terminal according to a second trigger condition inputted by the user, and the configuration instruction includes the apparatus identification and the second trigger condition; and a third processing module 212, configured to add the second trigger condition into the trigger condition group corresponding to the apparatus identification.

Take a practical scene for example. If the user needs to set the trigger condition for certain smart apparatus, he or she may use the terminal to acquire the apparatus identification of the smart apparatus from the smart apparatus, and input the second trigger condition via an interactive interface of the terminal. The third receiving module 211 receives the configuration instruction sent by the terminal and including the apparatus identification and the second trigger condition set by the user, the third processing module 212 adds the second trigger condition set by the user into the trigger condition group supported by the smart apparatus.

In conclusion, with the server for controlling a smart apparatus according to the embodiment of the present disclosure, the terminal sends the configuration instruction including the apparatus identification and the second trigger condition set by the user to the server, and the server adds the second trigger condition set by the user into the trigger condition group supported by the smart apparatus according to the configuration instruction, thus configuring the trigger condition group supported by the smart apparatus according to a user's requirement, and realizing the individuation and flexibility of smart home.

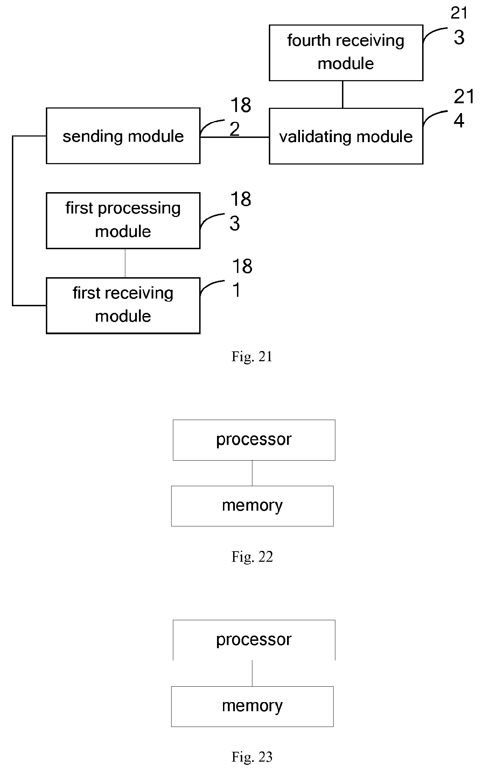

Fig. 21 is a block diagram illustrating a server, according to another exemplary embodiment. As shown in Fig. 21, based on any one of embodiments shown in Figs. 18-20, the server further includes: a fourth receiving module 213, configured to receive a login request from the terminal before an enquiry request containing an apparatus identification of the smart apparatus is received from the terminal by the first receiving module 181, the login request including a user identification and validation information of the user; and a validating module 214, configured to validate an identity of the user according to the login request. The sending module 182 is further configured to return a response indicating a success of a login to the terminal after the validation performed by the validating module 214 succeeds, the response indicating the success of the login configured to enable the terminal to acquire the apparatus identification from the smart apparatus, after the response indicating the success of the login is received by the terminal.

Take a practical scene for example. The fourth receiving module 213 receives the login request from the terminal, the validating module 214 validates the identity of the user according to the login request, and the sending module 182 returns the response indicating the success of the login to the terminal after the validation succeeds. After receiving the response indicating the success of the login, the terminal acquires the apparatus identification from the smart apparatus and executes subsequent steps in the method for controlling a smart apparatus.

In conclusion, the server according to the embodiment of the present disclosure validates the identity of the user according to the login request sent by the terminal and including the user identification and the validation information, and after the validation succeeds, the server executes corresponding steps in the method for controlling a smart apparatus. By validating the identity of the user before controlling the smart apparatus, the security of smart home is further increased.

Fig. 22 is a block diagram of a terminal, according to an exemplary embodiment. As shown in Fig. 22, the terminal may be implemented to include: a processor; and a memory for storing instructions executable by the processor. The processor is configured to: acquire an apparatus identification of the smart apparatus from the smart apparatus, and send an enquiry request containing the apparatus identification to a server; receive an enquiry response returned from the server and pushing the enquiry response to a user, the enquiry response including a trigger condition group and an execution condition group corresponding to the apparatus identification; send a control instruction to the server, the control instruction including a first trigger condition and a first execution condition selected by the user according to the trigger condition group and the execution condition group, the control instruction configured to enable the server to control the smart apparatus to execute the first execution condition when the server detects that the first trigger condition is met.

The terminal according to the embodiments of the present disclosure obtains the apparatus identification of the smart apparatus from the smart apparatus required to be controlled by the user, and obtains the trigger condition group and the execution condition group supported by the smart apparatus from the server according to the apparatus identification, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

Fig. 23 is a block diagram of a server, according to an exemplary embodiment. As shown in Fig. 23, the server may be implemented to include: a processor; and a memory for storing instructions executable by the processor. The processor is configured to: receive an enquiry request containing an apparatus identification of the smart apparatus from a terminal, the apparatus identification obtained from the smart apparatus by the terminal; send an enquiry response to the terminal, the enquiry response including a trigger condition group and an execution condition group corresponding to the apparatus identification; receive a control instruction from the terminal, the control instruction including a first trigger condition and a first execution condition selected by a user according to the trigger condition group and the execution condition group; control the smart apparatus to execute the first execution condition, when detecting that the first trigger condition is met.

The server according to the embodiments of the present disclosure receives the apparatus identification obtained by the terminal from the smart apparatus required to be controlled, returns the trigger condition group and the execution condition group supported by the smart apparatus to the terminal, the user selects his or her required trigger condition and execution condition from the trigger condition group and the execution condition group, and sends the required trigger condition and execution condition to the server via the terminal, and the server controls the smart apparatus according to the trigger condition and execution condition selected by the user. In the scene of a large number of smart apparatuses, the user may identify the apparatus identification of the smart apparatus required to be controlled conveniently and accurately via the terminal, so as to implement a smart home control in a convenient and accurate way.

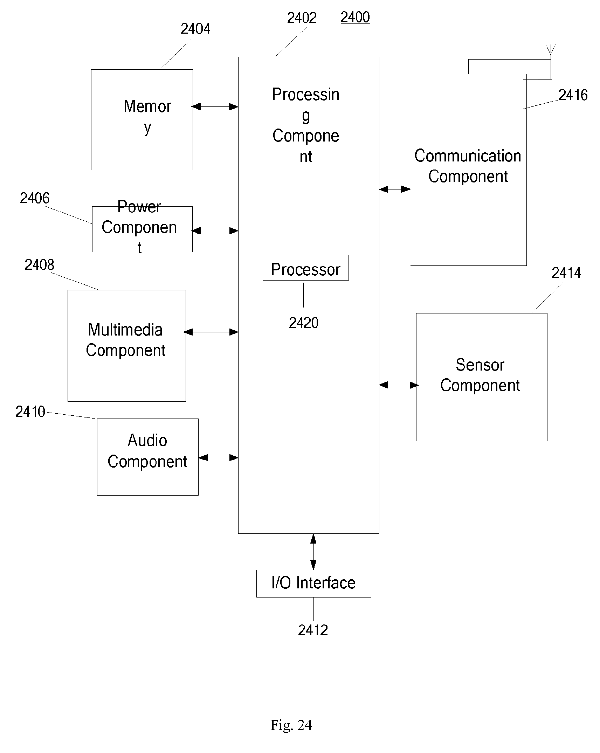

Fig. 24 is a block diagram of a terminal 2400, according to an exemplary embodiment. For example, the terminal 2400 may be a mobile phone, a computer, a digital broadcast terminal, a messaging device, a gaming console, a tablet, a medical device, exercise equipment, a personal digital assistant, and the like.

Referring to Fig. 24, the terminal 2400 may include one or more of the following components: a processing component 2402, a memory 2404, a power component 2406, a multimedia component 2408, an audio component 2410, an input/output (I/O) interface 2412, a sensor component 2414, and a communication component 2416.

The processing component 2402 typically controls overall operations of the terminal 2400, such as the operations associated with display, telephone calls, data communications, camera operations, and recording operations. The processing component 2402 may include one or more processors 2420 to execute instructions to perform all or part of the steps in the above described methods. Moreover, the processing component 2402 may include one or more modules which facilitate the interaction between the processing component 2402 and other components. For instance, the processing component 2402 may include a multimedia module to facilitate the interaction between the multimedia component 2408 and the processing component 2402.

The memory 2404 is configured to store various types of data to support the operation of the terminal 2400. Examples of such data include instructions for any applications or methods operated on the terminal 2400, contact data, phonebook data, messages, pictures, video, etc. The memory 2404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2406 provides power to various components of the terminal 2400. The power component 2406 may include a power management system, one or more power sources, and any other components associated with the generation, management, and distribution of power in the terminal 2400.

The multimedia component 2408 includes a screen providing an output interface between the terminal 2400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2408 includes a front camera and/or a rear camera. The front camera and the rear camera may receive an external multimedia datum while the terminal 2400 is in an operation mode, such as a photographing mode or a video mode. Each of the front camera and the rear camera may be a fixed optical lens system or have focus and optical zoom capability.

The audio component 2410 is configured to output and/or input audio signals. For example, the audio component 2410 includes a microphone ("MIC") configured to receive an external audio signal when the terminal 2400 is in an operation mode, such as a call mode, a recording mode, and a voice recognition mode. The received audio signal may be further stored in the memory 2404 or transmitted via the communication component 2416. In some embodiments, the audio component 2410 further includes a speaker to output audio signals.

The I/O interface 2412 provides an interface between the processing component 2402 and peripheral interface modules, such as a keyboard, a click wheel, buttons, and the like. The buttons may include, but are not limited to, a home button, a volume button, a starting button, and a locking button.

The sensor component 2414 includes one or more sensors to provide status assessments of various aspects of the terminal 2400. For instance, the sensor component 2414 may detect an open/closed status of the terminal 2400, relative positioning of components, e.g., the display and the keypad, of the terminal 2400, a change in position of the terminal 2400 or a component of the terminal 2400, a presence or absence of user contact with the terminal 2400, an orientation or an acceleration/deceleration of the terminal 2400, and a change in temperature of the terminal 2400. The sensor component 2414 may include a proximity sensor configured to detect the presence of nearby objects without any physical contact. The sensor component 2414 may also include a light sensor, such as a CMOS or CCD image sensor, for use in imaging applications. In some embodiments, the sensor component 2414 may also include an accelerometer sensor, a gyroscope sensor, a magnetic sensor, a pressure sensor, or a temperature sensor.

The communication component 2416 is configured to facilitate communication, wired or wirelessly, between the terminal 2400 and other devices. The terminal 2400 can access a wireless network based on a communication standard, such as WiFi, 2G, or 3G, or a combination thereof. In one exemplary embodiment, the communication component 2416 receives a broadcast signal or broadcast associated information from an external broadcast management system via a broadcast channel. In one exemplary embodiment, the communication component 2416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 2400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2404, executable by the processor 2420 in the terminal 2400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a mobile terminal, causes the mobile terminal to perform a method for controlling a smart apparatus. The method includes: acquiring an apparatus identification of a smart apparatus from the smart apparatus, and sending an enquiry request containing the apparatus identification to a server; receiving an enquiry response returned from the server and pushing the enquiry response to a user, the enquiry response including a trigger condition group and an execution condition group corresponding to the apparatus identification; sending a control instruction to the server, the control instruction including a first trigger condition and a first execution condition selected by the user according to the trigger condition group and the execution condition group, the control instruction configured to enable the server to control the smart apparatus to execute the first execution condition when the server detects that the first trigger condition is met.

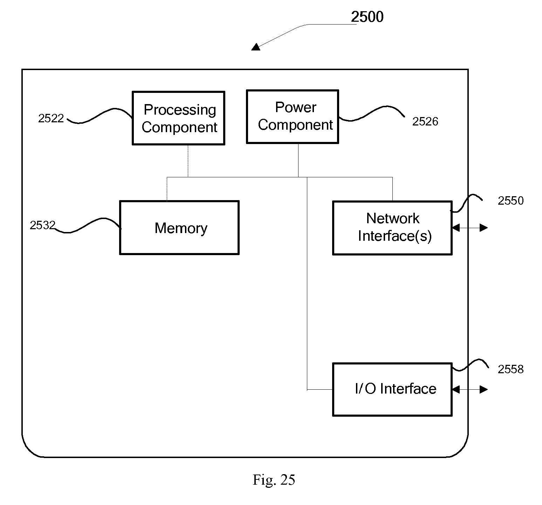

Fig. 25 is a block diagram of a server 2500, according to an exemplary embodiment. For example, the server 2500 may be a server. Referring to Fig. 25, the server 2500 includes a processing component 2522 (e.g. one or more processors), a memory source represented by a memory 2532 for storing instructions (e.g. application programs) executed by the processing component 2522. The application programs stored in the memory 2532 may include one or more modules (not shown). Each module may include a set of instructions. Further, the processing component 2522 may be configured to execute the sets of instructions to execute the method described above: receiving an enquiry request containing an apparatus identification of the smart apparatus from a terminal, the apparatus identification obtained from the smart apparatus by the terminal; sending an enquiry response to the terminal, the enquiry response including a trigger condition group and an execution condition group corresponding to the apparatus identification; receiving a control instruction from the terminal, the control instruction including a first trigger condition and a first execution condition selected by a user according to the trigger condition group and the execution condition group; controlling the smart apparatus to execute the first execution condition, when detecting that the first trigger condition is met.

The server 2500 may also include a power supply 2526 configured to perform a power management of the server 2500, a wired or wireless network interfaces 2550 configured to link the server 2500 to the network , an input/output interfaces 2558. The server 2500 may operate an operating systems (such as Windows ServerTM, Mac OS XTM, UnixTM, LinuxTM, FreeBSDTM, or the like) stored in the memory 2532.

It may be clearly understood by those skilled in the art that, for purpose of convenience and simple for description, the specific operating processes of the terminal and the server described above may refer to corresponding processes in the method embodiments described above.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for controlling a smart apparatus performed on a terminal, comprising:
acquiring (201), by the terminal via a close range wireless communication with the smart apparatus, or by scanning a two-dimensional code of the smart apparatus by the terminal, an apparatus identification of the smart apparatus from the smart apparatus, and sending an enquiry request containing the apparatus identification to a server by a terminal;
receiving (102, 202, 302, 603) an enquiry response returned from the server and pushing the enquiry response to a user by the terminal, the enquiry response comprising a trigger condition group and an execution condition group corresponding to the apparatus identification; and
sending (103, 203, 303, 403, 604) a control instruction to the server by the terminal, the control instruction comprising a first trigger condition and a first execution condition selected by the user according to the trigger condition group and the execution condition group, the control instruction configured to enable the server to control the smart apparatus to execute the first execution condition when the server detects that the first trigger condition is met.

2. The method of claim 1, wherein acquiring (201) the apparatus identification by the terminal via a close range wireless communication with the smart apparatus, comprises:
sending (204) an NFC link request to the smart apparatus by the terminal to establish an NFC link with the smart apparatus; sending (205) a first acquiring request to the smart apparatus by the terminal via the NFC link; and receiving (206) a first acquiring response returned from the smart apparatus via the NFC link by the terminal, the first acquiring response comprising the apparatus identification;
or
sending (207) an RF signal to an RFID tag of the smart apparatus by the terminal, wherein the apparatus identification of the smart apparatus is stored in the RFID tag; and receiving (208) the apparatus identification returned from the RFID tag according to the RF signal by the terminal;
or
sending (209) a matching request to the smart apparatus and establishing a Bluetooth link with the smart apparatus according to a matching response returned from the smart apparatus by the terminal; sending (210) a second acquiring request to the smart apparatus via the Bluetooth link by the terminal; and receiving (220) a second acquiring response returned from the smart apparatus via the Bluetooth link by the terminal, the second acquiring response comprising the apparatus identification.

3. The method of claim 1 or 2, wherein the enquiry request further comprises a user identification, and the enquiry response is returned by the server after the server detects that the user identification and the apparatus identification coincide with a binding relationship according to an apparatus identification currently bound to respective user identification.

4. The method of claim 3, further comprising:
sending (404) a binding request to the server by the terminal, the binding request comprising the user identification, the apparatus identification and certification information, and the binding request configured to enable the server to establish the binding relationship between the user identification and the apparatus identification after the certification information is successfully certificated by the server.

5. The method of claim 1 or 2, after acquiring (101, 501) the apparatus identification of the smart apparatus from the smart apparatus by the terminal, further comprising:
sending (504) a configuration instruction to the server by the terminal according to a second trigger condition inputted by the user, the configuration instruction comprising the apparatus identification and the second trigger condition, and the configuration instruction configured to enable the server to add the second trigger condition into the trigger condition group corresponding to the apparatus identification.

6. The method of claim 1 or 2, after acquiring (101, 501) the apparatus identification of the smart apparatus from the smart apparatus by the terminal, further comprising:
sending (601) a login request to the server by the terminal, the login request comprising a user identification and validation information of the user, and the login request configured to enable the server to validate an identity of the user according to the login request; and
acquiring (602) the apparatus identification from the smart apparatus by the server, after receiving a response indicating a success of a login returned from the server.

7. A method for controlling a smart apparatus performed on a server, comprising:
receiving (701, 901) an enquiry request containing an apparatus identification of the smart apparatus from a terminal by a server, the apparatus identification obtained from the smart apparatus by the terminal via a close range wireless communication with the smart apparatus, or by scanning a two-dimensional code of the smart apparatus;
sending (702, 904, 1004) an enquiry response to the terminal by the server, the enquiry response comprising a trigger condition group and an execution condition group corresponding to the apparatus identification;
receiving (703, 803, 905, 1005) a control instruction from the terminal by the server, the control instruction comprising a first trigger condition and a first execution condition selected by a user according to the trigger condition group and the execution condition group; and
controlling (704, 804, 906, 1006) the smart apparatus to execute the first execution condition by the server, when detecting that the first trigger condition is met.

8. The method of claim 7, wherein the enquiry request further comprises a user identification of the user; sending (702, 904, 1004) an enquiry response to the terminal by the server comprises:
sending (802) the enquiry response to the terminal by the server, after detecting that the user identification and the apparatus identification coincide with a binding relationship according to an apparatus identification currently bound to respective user identification.

9. The method of claim 8, further comprising:
receiving (805) a binding request from the terminal by the server, the binding request comprising the user identification, the apparatus identification and certification information; and
establishing (806) the binding relationship between the user identification and the apparatus identification by the server, after successfully certificating the certification information.

10. The method of claim 7, further comprising:
receiving (902) a configuration instruction from the terminal by the server, wherein the configuration instruction is sent by the terminal according to a second trigger condition inputted by the user, and the configuration instruction comprises the apparatus identification and the second trigger condition; and
adding (903) the second trigger condition into the trigger condition group corresponding to the apparatus identification by the server.

11. The method of any one of claims 7 to 10, before receiving (701, 901, 1003) an enquiry request containing an apparatus identification of the smart apparatus from a terminal by a server, further comprising:
receiving (1001) a login request from the terminal by the server, the login request comprising a user identification and validation information of the user; and
validating (1002) an identity of the user according to the login request, and returning a response indicating a success of a login to the terminal by the server after the identity of the user is successfully validated, the response indicating the success of the login configured to enable the terminal to acquire the apparatus identification from the smart apparatus after the response indicating the success of the login is received by the terminal.

12. A terminal, comprising:
an acquiring module (121), configured to acquire an apparatus identification of a smart apparatus from the smart apparatus via a close range wireless communication with the smart apparatus, or by scanning a two-dimensional code of the smart apparatus;
a first sending module (122), configured to send an enquiry request containing the apparatus identification to a server;
a first receiving module (123), configured to receive an enquiry response returned from the server, the enquiry response comprising a trigger condition group and an execution condition group corresponding to the apparatus identification; and
a pushing module (124), configured to push the enquiry response to a user;
wherein the first sending module (122) is further configured to send a control instruction to the server, the control instruction comprising a first trigger condition and a first execution condition selected by the user according to the trigger condition group and the execution condition group, the control instruction configured to enable the server to control the smart apparatus to execute the first execution condition when the server detects that the first trigger condition is met.

13. A server, comprising:
a first receiving module (181), configured to receive an enquiry request containing an apparatus identification of the smart apparatus from a terminal, the apparatus identification obtained from the smart apparatus by the terminal via a close range wireless communication with the smart apparatus, or by scanning a two-dimensional code of the smart apparatus;
a sending module (182), configured to send an enquiry response to the terminal, the enquiry response comprising a trigger condition group and an execution condition group corresponding to the apparatus identification; and
a first processing module (183); wherein
the first receiving module (181) is further configured to receive a control instruction from the terminal, the control instruction comprising a first trigger condition and a first execution condition selected by a user according to the trigger condition group and the execution condition group; and
the first processing module (183) is configured to control the smart apparatus to execute the first execution condition, when detecting that the first trigger condition is met.

## Patentansprüche

1. Verfahren zum Steuern einer intelligenten Einrichtung, durchgeführt auf einem Endgerät, Folgendes umfassend:
Erfassen (201) einer Einrichtungskennung der intelligenten Einrichtung von der intelligenten Einrichtung durch das Endgerät über eine Nahdistanzdrahtloskommunikation mit der intelligenten Einrichtung oder durch Scannen eines zweidimensionalen Codes der intelligenten Einrichtung durch das Endgerät, und Senden einer Abfrageanforderung, die die Einrichtungskennung enthält, an einen Server durch ein Endgerät;
Empfangen (102, 202, 302, 603) einer Abfrageantwort, zurückgegeben durch den Server, und Weiterleiten der Abfrageantwort an einen Benutzer durch das Endgerät, wobei die Abfrageantwort eine Auslösebedingungsgruppe und eine Ausführungsbedingungsgruppe, die der Einrichtungskennung entsprechen, umfasst; und
Senden (103, 203, 303, 403, 604) einer Steuerungsanweisung an den Server durch das Endgerät, wobei die Steuerungsanweisung eine erste Auslösebedingung und eine erste Ausführungsbedingung, ausgewählt durch den Benutzer gemäß der Auslösebedingungsgruppe und der Ausführungsbedingungsgruppe, umfasst, wobei die Steuerungsanweisung konfiguriert ist, es dem Server zu ermöglichen, die intelligente Einrichtung zu steuern, die erste Ausführungsbedingung auszuführen, wenn der Server feststellt, dass die erste Auslösebedingung erfüllt ist.

2. Verfahren nach Anspruch 1, wobei das Erfassen (201) der Einrichtungskennung durch das Endgerät über eine Nahdistanzdrahtloskommunikation mit der intelligenten Einrichtung Folgendes umfasst:
Senden (204) einer NFC-Verbindungsanforderung an die intelligente Einrichtung durch das Endgerät zum Herstellen einer NFC-Verbindung mit der intelligenten Einrichtung; Senden (205) einer ersten Erfassungsanforderung an die intelligente Einrichtung durch das Endgerät über die NFC-Verbindung; und Empfangen (206) einer ersten Erfassungsantwort, zurückgegeben durch die intelligente Einrichtung über die NFC-Verbindung, durch das Endgerät, wobei die erste Erfassungsantwort die Einrichtungskennung umfasst;
oder
Senden (207) eines RF-Signals an ein RFID-Tag der intelligenten Einrichtung durch das Endgerät, wobei die Einrichtungskennung der intelligenten Einrichtung in dem RFID-Tag gespeichert wird; und empfangen (208) der Einrichtungskennung, zurückgegeben von dem RFID-Tag gemäß dem RF-Signal, durch das Endgerät;
oder
Senden (209) einer Abgleichungsanforderung an die intelligente Einrichtung und Herstellen einer Bluetooth-Verbindung mit der intelligenten Einrichtung gemäß einer Abgleichungsantwort, zurückgegeben von der intelligenten Einrichtung durch das Endgerät; Senden (210) einer zweiten Erfassungsanforderung an die intelligente Einrichtung über die Bluetooth-Verbindung durch das Endgerät; und Empfangen (220) einer zweiten Erfassungsantwort, zurückgegeben von der intelligenten Einrichtung über die Bluetooth-Verbindung, durch das Endgerät, wobei die zweite Erfassungsantwort die Einrichtungskennung umfasst.

3. Verfahren nach Anspruch 1 oder 2, wobei die Abfrageanforderung ferner eine Benutzerkennung umfasst und die Abfrageantwort durch den Server zurückgegeben wird, nachdem der Server festgestellt hat, dass die Benutzerkennung und die Einrichtungskennung mit einer Bindungsbeziehung gemäß einer Einrichtungskennung übereinstimmen, die aktuell an eine jeweilige Benutzerkennung gebunden ist.

4. Verfahren nach Anspruch 3, ferner umfassend:
Senden (404) einer Bindungsanforderung an den Server durch das Endgerät, wobei die Bindungsanforderung die Benutzerkennung, die Einrichtungskennung und Zertifizierungsinformationen umfasst und wobei die Bindungsanforderung konfiguriert ist, es dem Server zu ermöglichen, die Bindungsbeziehung zwischen der Benutzerkennung und der Einrichtungskennung herzustellen, nachdem die Zertifizierungsinformationen erfolgreich durch den Server zertifiziert wurden.

5. Verfahren nach Anspruch 1 oder 2, nach dem Erfassen (101, 501) der Einrichtungskennung der intelligenten Einrichtung von der intelligenten Einrichtung durch das Endgerät, ferner umfassend:
Senden (504) einer Konfigurationsanweisung an den Server durch das Endgerät gemäß einer zweiten Auslösebedingung, die durch den Benutzer eingegeben wurde, wobei die Konfigurationsanweisung die Einrichtungskennung und die zweite Auslösebedingung umfasst und die Konfigurationsanweisung konfiguriert ist, es dem Server zu ermöglichen, die zweite Auslösebedingung der Auslösebedingungsgruppe, die der Einrichtungskennung entspricht, hinzuzufügen.

6. Verfahren nach Anspruch 1 oder 2, nach dem Erfassen (101, 501) der Einrichtungskennung der intelligenten Einrichtung von der intelligenten Einrichtung durch das Endgerät, ferner umfassend:
Senden (601) einer Login-Anforderung an den Server durch das Endgerät, wobei die Login-Anforderung eine Benutzerkennung und Validierungsinformationen des Benutzers umfasst, und die Login-Anforderung konfiguriert ist, es dem Server zu ermöglichen, eine Identität des Benutzers gemäß der Login-Anforderung zu validieren; und
Erfassen (602) der Einrichtungskennung von der intelligenten Einrichtung durch den Server, nach dem Empfangen einer von dem Server zurückgegebenen Antwort, die auf einen Erfolg eines Logins hinweist.

7. Verfahren zum Steuern einer intelligenten Einrichtung, durchgeführt auf einem Server, Folgendes umfassend:
Empfangen (701, 901) einer Abfrageanforderung, die eine Einrichtungskennung der intelligenten Einrichtung von einem Endgerät enthält, durch einen Server, wobei die Einrichtungskennung von der intelligenten Einrichtung durch das Endgerät über eine Nahdistanzdrahtloskommunikation mit der intelligenten Einrichtung oder durch Scannen eines zweidimensionalen Codes der intelligenten Einrichtung erhalten wird;
Senden (702, 904, 1004) einer Abfrageantwort an das Endgerät durch den Server, wobei die Abfrageantwort eine Auslösebedingungsgruppe und eine Ausführungsbedingungsgruppe, die der Einrichtungskennung entsprechen, umfasst;
Empfangen (703, 803, 905, 1005) einer Steuerungsanweisung von dem Endgerät durch den Server, wobei die Steuerungsanweisung eine erste Auslösebedingung und eine erste Ausführungsbedingung umfasst, ausgewählt durch einen Benutzer gemäß der Auslösebedingungsgruppe und der Ausführungsbedingungsgruppe; und
Steuern (704, 804, 906, 1006) der intelligenten Einrichtung, die erste Ausführungsbedingung durch den Server auszuführen, wenn festgestellt wird, dass die erste Auslösebedingung erfüllt ist.

8. Verfahren nach Anspruch 7, wobei die Abfrageanforderung ferner eine Benutzerkennung des Benutzers umfasst; wobei Senden (702, 904, 1004) einer Abfrageantwort an das Endgerät durch den Server umfasst:
Senden (802) der Abfrageantwort an das Endgerät durch den Server, nach dem Feststellen, dass die Benutzerkennung und die Einrichtungskennung mit einer Bindungsbeziehung gemäß einer Einrichtungskennung, die aktuell an eine jeweilige Benutzerkennung gebunden ist, übereinstimmen.

9. Verfahren nach Anspruch 8, ferner umfassend:
Empfangen (805) einer Bindungsanforderung von dem Endgerät durch den Server, wobei die Bindungsanforderung die Benutzerkennung, die Einrichtungskennung und Zertifizierungsinformationen umfasst; und
Herstellen (806) der Bindungsbeziehung zwischen der Benutzerkennung und der Einrichtungskennung durch den Server, nach dem erfolgreichen Zertifizieren der Zertifizierungsinformationen.

10. Verfahren nach Anspruch 7, ferner umfassend:
Empfangen (902) einer Konfigurationsanweisung von dem Endgerät durch den Server, wobei die Konfigurationsanweisung durch das Endgerät gemäß einer zweiten Auslösebedingung, die durch den Benutzer eingegeben wird, gesendet wird, und die Konfigurationsanweisung die Einrichtungskennung und die zweite Auslösebedingung umfasst; und
Hinzufügen (903) der zweiten Auslösebedingung zu der Auslösebedingungsgruppe durch den Server, die der Einrichtungskennung entspricht.

11. Verfahren nach einem der Ansprüche 7 bis 10, vor dem Empfangen (701, 901, 1003) einer Abfrageanforderung, die eine Einrichtungskennung der intelligenten Einrichtung von einem Endgerät enthält, durch einen Server, ferner umfassend:
Empfangen (1001) einer Login-Anforderung von dem Endgerät durch den Server, wobei die Login-Anforderung eine Benutzerkennung und Validierungsinformationen des Benutzers umfasst; und
Validieren (1002) einer Identität des Benutzers gemäß der Login-Anforderung, und Zurückgeben einer Antwort, die auf einen Erfolg eines Logins hinweist, an das Endgerät durch den Server, nachdem die Identität des Benutzers erfolgreich validiert wurde, wobei die Antwort, die auf den Erfolg des Logins hinweist, konfiguriert ist, es dem Endgerät zu ermöglichen, die Einrichtungskennung von der intelligenten Einrichtung zu erhalten, nachdem die Antwort, die auf den Erfolg des Logins hinweist, durch das Endgerät empfangen wurde.

12. Endgerät, Folgendes umfassend:
ein Erfassungsmodul (121), konfiguriert, um eine Einrichtungskennung einer intelligenten Einrichtung von der intelligenten Einrichtung über eine Nahdistanzdrahtloskommunikation mit der intelligenten Einrichtung oder durch Scannen eines zweidimensionalen Codes der intelligenten Einrichtung zu erhalten;
ein erstes Sendemodul (122), konfiguriert, um eine Abfrageanforderung, die die Einrichtungskennung enthält, an einen Server zu senden;
ein zweites Sendemodul (123), konfiguriert, um eine Abfrageantwort, die von dem Server zurückgegeben wird, zu empfangen, wobei die Abfrageantwort eine Auslösebedingungsgruppe und eine Ausführungsbedingungsgruppe, die der Einrichtungskennung entsprechen, umfasst; und
ein Push-Modul (124), konfiguriert, um die Abfrageantwort an einen Benutzer weiterzu leiten;
wobei das erste Sendemodul (122) ferner konfiguriert ist, eine Steuerungsanweisung an den Server zu senden, wobei die Steuerungsanweisung eine erste Auslösebedingung und eine erste Ausführungsbedingung, ausgewählt durch den Benutzer gemäß der Auslösebedingungsgruppe und der Ausführungsbedingungsgruppe, umfasst, wobei die Steuerungsanweisung konfiguriert ist, es dem Server zu ermöglichen, die intelligente Einrichtung zu steuern, die erste Ausführungsbedingung auszuführen, wenn der Server feststellt, dass die erste Auslösebedingung erfüllt ist.

13. Server, Folgendes umfassend:
ein erstes Empfangsmodul (181), konfiguriert, eine Abfrageanforderung, die eine Einrichtungskennung der intelligenten Einrichtung enthält, von einem Endgerät zu empfangen, wobei die Einrichtungskennung von der intelligenten Einrichtung durch das Endgerät über eine Nahdistanzdrahtloskommunikation mit der intelligenten Einrichtung oder durch Scannen eines zweidimensionalen Codes der intelligenten Einrichtung erhalten wird;
ein Sendemodul (182), konfiguriert, eine Abfrageantwort an das Endgerät zu senden, wobei die Abfrageantwort eine Auslösebedingungsgruppe und eine Ausführungsbedingungsgruppe, die der Einrichtungskennung entsprechen, umfasst; und
ein erstes Verarbeitungsmodul (183); wobei
das erste Empfangsmodul (181) ferner konfiguriert ist, eine Steuerungsanweisung von dem Endgerät zu empfangen, wobei die Steuerungsanweisung eine erste Auslösebedingung und eine erste Ausführungsbedingung, ausgewählt durch einen Benutzer gemäß der Auslösebedingungsgruppe und der Ausführungsbedingungsgruppe, umfasst; und
das erste Verarbeitungsmodul (183) konfiguriert ist, die intelligente Einrichtung zu steuern, die erste Ausführungsbedingung auszuführen, wenn festgestellt wird, dass die erste Auslösebedingung erfüllt ist.

## Revendications

1. Procédé de commande d'un appareil intelligent réalisé sur un terminal, comprenant :
l'acquisition (201), par le terminal via une communication sans fil à faible portée avec l'appareil intelligent, ou par balayage d'un code bidimensionnel de l'appareil intelligent par le terminal, d'une identification d'appareil de l'appareil intelligent à partir de l'appareil intelligent, et l'envoi d'une demande d'investigation contenant l'identification d'appareil à un serveur par un terminal ;
la réception (102, 202, 302, 603) d'une réponse d'investigation renvoyée par le serveur et le fait de pousser la réponse d'investigation à un utilisateur par le terminal, la réponse d'investigation comprenant un groupe de conditions de déclenchement et un groupe de conditions d'exécution correspondant à l'identification d'appareil ; et
l'envoi (103, 203, 303, 403, 604) d'une instruction de commande au serveur par le terminal, l'instruction de commande comprenant une première condition de déclenchement et une première condition d'exécution choisies par l'utilisateur selon le groupe de conditions de déclenchement et le groupe de conditions d'exécution, l'instruction de commande étant configurée pour permettre au serveur de commander à l'appareil intelligent d'exécuter la première condition d'exécution lorsque le serveur détecte que la première condition de déclenchement est satisfaite.

2. Procédé selon la revendication 1, dans lequel l'acquisition (201) de l'identification d'appareil par le terminal via une communication sans fil à faible portée avec l'appareil intelligent, comprend :
l'envoi (204) d'une demande de liaison CCP à l'appareil intelligent par le terminal pour établir une liaison CCP avec l'appareil intelligent ; l'envoi (205) d'une première demande d'acquisition à l'appareil intelligent par le terminal via la liaison CCP ; et la réception (206) d'une première réponse d'acquisition renvoyée depuis l'appareil intelligent via la liaison CCP par le terminal, la première réponse d'acquisition comprenant l'identification d'appareil ;
ou
l'envoi (207) d'un signal RF à une étiquette RFID de l'appareil intelligent par le terminal, dans lequel l'identification d'appareil de l'appareil intelligent est stockée dans l'étiquette RFID ; et la réception (208) de l'identification d'appareil renvoyée depuis l'étiquette RFID selon le signal RF par le terminal ;
ou
l'envoi (209) d'une demande de concordance à l'appareil intelligent et l'établissement d'une liaison Bluetooth avec l'appareil intelligent selon une réponse de concordance renvoyée depuis l'appareil intelligent par le terminal ; l'envoi (210) d'une seconde demande d'acquisition à l'appareil intelligent via la liaison Bluetooth par le terminal ; et la réception (220) d'une seconde réponse d'acquisition renvoyée depuis l'appareil intelligent via la liaison Bluetooth par le terminal, la seconde réponse d'acquisition comprenant l'identification d'appareil.

3. Procédé selon la revendication 1 ou 2, dans lequel la demande d'investigation comprend en outre une identification d'utilisateur, et la réponse d'investigation est renvoyée par le serveur après que le serveur détecte que l'identification d'utilisateur et l'identification d'appareil coïncident avec une relation de liage selon une identification d'appareil actuellement liée à une identification d'utilisateur respective.

4. Procédé selon la revendication 3, comprenant en outre :
l'envoi (404) d'une demande de liage au serveur par le terminal, la demande de liage comprenant l'identification d'utilisateur, l'identification d'appareil et des informations de certification, et la demande de liage étant configurée pour permettre au serveur d'établir la relation de liage entre l'identification d'utilisateur et l'identification d'appareil après que les informations de certification sont certifiées avec succès par le serveur.

5. Procédé selon la revendication 1 ou 2, après l'acquisition (101, 501) de l'identification d'appareil de l'appareil intelligent depuis l'appareil intelligent par le terminal, comprenant en outre :
l'envoi (504) d'une instruction de configuration au serveur par le terminal selon une seconde condition de déclenchement entrée par l'utilisateur, l'instruction de configuration comprenant l'identification d'appareil et la seconde condition de déclenchement, et l'instruction de configuration étant configurée pour permettre au serveur d'ajouter la seconde condition de déclenchement dans le groupe de conditions de déclenchement correspondant à l'identification d'appareil.

6. Procédé selon la revendication 1 ou 2, après l'acquisition (101, 501) de l'identification d'appareil de l'appareil intelligent depuis l'appareil intelligent par le terminal, comprenant en outre :
l'envoi (601) d'une demande d'ouverture de session au serveur par le terminal, la demande d'ouverture de session comprenant une identification d'utilisateur et des informations de validation de l'utilisateur, et la demande d'ouverture de session étant configurée pour permettre au serveur de valider une identité de l'utilisateur selon la demande d'ouverture de session ; et
l'acquisition (602) de l'identification d'appareil depuis l'appareil intelligent par le serveur, après la réception d'une réponse indiquant un succès d'une ouverture de session renvoyée depuis le serveur.

7. Procédé de commande d'un appareil intelligent réalisé sur un serveur, comprenant :
la réception (701, 901) d'une demande d'investigation contenant une identification d'appareil de l'appareil intelligent en provenance d'un terminal par un serveur, l'identification d'appareil étant obtenue depuis l'appareil intelligent par le terminal via une communication sans fil à faible portée avec l'appareil intelligent, ou par balayage d'un code bidimensionnel de l'appareil intelligent ;
l'envoi (702, 904, 1004) d'une réponse d'investigation au terminal par le serveur, la réponse d'investigation comprenant un groupe de conditions de déclenchement et un groupe de conditions d'exécution correspondant à l'identification d'appareil ;
la réception (703, 803, 905, 1005) d'une instruction de commande en provenance du terminal par le serveur, l'instruction de commande comprenant une première condition de déclenchement et une première condition d'exécution choisies par un utilisateur selon le groupe de conditions de déclenchement et le groupe de conditions d'exécution ; et
la commande (704, 804, 906, 1006) à l'appareil intelligent d'exécuter la première condition d'exécution par le serveur, lors de la détection que la première condition de déclenchement est satisfaite.

8. Procédé selon la revendication 7, dans lequel la demande d'investigation comprend en outre une identification d'utilisateur de l'utilisateur ; l'envoi (702, 904, 1004) d'une réponse d'investigation au terminal par le serveur comprend :
l'envoi (802) de la réponse d'investigation au terminal par le serveur, après détection que l'identification d'utilisateur et l'identification d'appareil coïncident avec une relation de liage selon une identification d'appareil actuellement liée à une identification d'utilisateur respective.

9. Procédé selon la revendication 8, comprenant en outre :
la réception (805) d'une demande de liage en provenance du terminal par le serveur, la demande de liage comprenant l'identification d'utilisateur, l'identification d'appareil et des informations de certification ; et
l'établissement (806) de la relation de liage entre l'identification d'utilisateur et l'identification d'appareil par le serveur, après certification avec succès des informations de certification.

10. Procédé selon la revendication 7, comprenant en outre :
la réception (902) d'une instruction de configuration en provenance du terminal par le serveur, dans lequel l'instruction de configuration est envoyée par le terminal selon une seconde condition de déclenchement entrée par l'utilisateur, et l'instruction de configuration comprend l'identification d'appareil et la seconde condition de déclenchement ; et
l'ajout (903) de la seconde condition de déclenchement dans le groupe de conditions de déclenchement correspondant à l'identification d'appareil par le serveur.

11. Procédé selon l'une quelconque des revendications 7 à 10, avant la réception (701, 901, 1003) d'une demande d'investigation contenant une identification d'appareil de l'appareil intelligent en provenance d'un terminal par un serveur, comprenant en outre :
la réception (1001) d'une demande d'ouverture de session en provenance du terminal par le serveur, la demande d'ouverture de session comprenant une identification d'utilisateur et des informations de validation de l'utilisateur ; et
la validation (1002) d'une identité de l'utilisateur selon la demande d'ouverture de session, et le renvoi d'une réponse indiquant un succès d'une ouverture de session au terminal par le serveur après que l'identité de l'utilisateur est validée avec succès, la réponse indiquant le succès de l'ouverture de session configurée pour permettre au terminal d'acquérir l'identification d'appareil depuis l'appareil intelligent après que la réponse indiquant le succès de l'ouverture de session est reçue par le terminal.

12. Terminal, comprenant :
un module d'acquisition (121), configuré pour acquérir une identification d'appareil d'un appareil intelligent depuis l'appareil intelligent via une communication sans fil à faible portée avec l'appareil intelligent, ou par balayage d'un code bidimensionnel de l'appareil intelligent ;
un premier module d'envoi (122), configuré pour envoyer une demande d'investigation contenant l'identification d'appareil à un serveur ;
un premier module de réception (123), configuré pour recevoir une réponse d'investigation renvoyée par le serveur, la réponse d'investigation comprenant un groupe de conditions de déclenchement et un groupe de conditions d'exécution correspondant à l'identification d'appareil ; et
un module de poussée (124), configuré pour pousser la réponse d'investigation à un utilisateur ;
dans lequel le premier module d'envoi (122) est en outre configuré pour envoyer une instruction de commande au serveur, l'instruction de commande comprenant une première condition de déclenchement et une première condition d'exécution choisies par l'utilisateur selon le groupe de conditions de déclenchement et le groupe de conditions d'exécution, l'instruction de commande étant configurée pour permettre au serveur de commander à l'appareil intelligent d'exécuter la première condition d'exécution lorsque le serveur détecte que la première condition de déclenchement est satisfaite.

13. Serveur, comprenant :
un premier module de réception (181), configuré pour recevoir une demande d'investigation contenant une identification d'appareil de l'appareil intelligent en provenance d'un terminal, l'identification d'appareil étant obtenue depuis l'appareil intelligent par le terminal via une communication sans fil à faible portée avec l'appareil intelligent, ou par balayage d'un code bidimensionnel de l'appareil intelligent ;
un module d'envoi (182), configuré pour envoyer une réponse d'investigation au terminal, la réponse d'investigation comprenant un groupe de conditions de déclenchement et un groupe de conditions d'exécution correspondant à l'identification d'appareil ; et
un premier module de traitement (183) ; dans lequel
le premier module de réception (181) est en outre configuré pour recevoir une instruction de commande en provenance du terminal, l'instruction de commande comprenant une première condition de déclenchement et une première condition d'exécution choisies par un utilisateur selon le groupe de conditions de déclenchement et le groupe de conditions d'exécution ; et
le premier module de traitement (183) est configuré pour commander à l'appareil intelligent d'exécuter la première condition d'exécution, lors de la détection que la première condition de déclenchement est satisfaite.
